# EUROPEAN PATENT APPLICATION

(11) **EP 4 589 162 A1**
(43) Date of publication of application: **23.07.2025**
(21) Application number: 23865610.2
(22) Date of filing: 15.09.2023
(51) Int. Cl.: F16C 19/18, F16J 15/3204, F16C 33/78

(54) **METHOD FOR MANUFACTURING HUB SEAL**

(30) Priority: 16.09.2022 JP 2022148367
(71) Applicant: NOK Corporation, Minato-ku Tokyo 105-8585 (JP)
(72) Inventor: SAKANO, Yuya, Fukushima-shi Fukushima 960-1193 (JP); HIROTA, Kazuki, Fukushima-shi Fukushima 960-1193 (JP)
(74) Representative: Global IP Europe Patentanwaltskanzlei
(86) International application number: PCT/JP2023/033671
(87) International publication number: WO 2024/058261

(57) **Abstract**

A method for manufacturing a hub seal according to an embodiment of the present invention includes: setting a set rotation speed as a rotation speed at which a foreign body entering an upstream space S of the hub seal (1) is positioned at a desired foreign-body surface position in a radial direction by rotation of the hub seal (1); designing a shape of a side lip (4) such that torque of the hub seal (1) at the set rotation speed becomes a desired value; and manufacturing the hub seal such that the hub seal becomes the hub seal (1) which has the designed shape of the side lip (4).

## Description

### Technical Field

The present invention relates to a method for manufacturing a hub seal.

### Background Art

In a vehicle, for example, an automobile, a hub bearing rotatably supporting a wheel is in an environment where the hub bearing is directly exposed to foreign bodies such as rain water, muddy water, and dust. Thus, in related art, a hub seal as a sealing device is mounted on a hub bearing in order to intend sealing of a space which is formed between an outer ring capable of relative rotation about an axis line and a hub. The hub seal is intended to perform sealing for a lubricant in an internal portion of the hub bearing and is intended to prevent foreign bodies from entering the internal portion. Further, reduction in sliding resistance (torque resistance) of a seal lip against rotation of the hub seal has been demanded for such a hub seal in order to reduce torque necessary for rotation of the hub seal due to a request for reduction in fuel consumption and so forth. Thus, there have been some hub seals in related art which are intended to reduce the torque resistance (for example, see Patent Literature 1).

### Citation List

### Patent Literature

Patent Literature 1: Registered Utility Model No. 3201207

### Summary of Invention

### Technical Problem

In order to reduce torque resistance of a hub seal, a measure is possible in which force that a seal lip fastens an outer peripheral surface of a hub (lip reaction force of the seal lip) is reduced; however, because lowering of the lip reaction force of the seal lip lowers seal performance, there is a limit, for maintaining needed seal performance, to reduction in the lip reaction force of the seal lip. As described above, in the hub seal of a hub bearing in related art, in order to maintain the needed seal performance, there is a limit to reduction in the lip reaction force of the seal lip, and there is a limit to reduction in torque of the hub seal. Thus, a configuration which can lower the limit, for maintaining the needed seal performance, to reduction in the torque of the hub seal has been demanded for the hub seal of the hub bearing in related art.

An object of the present invention is to provide a hub seal that can lower a limit, for maintaining needed seal performance, to reduction in torque of the method for manufacturing the hub seal.

### Solution to Problem

For solving the above problem, a method for manufacturing a hub seal according to the present invention is a method for manufacturing a hub seal, the hub seal having a side lip and being intended for sealing of a space between an outer ring and a hub of a hub bearing, the method being characterized by including: setting a set rotation speed as a rotation speed at which a foreign body entering an internal portion of the hub seal is positioned at a desired position in a radial direction orthogonal to an axis line by rotation around the axis line; designing a shape of the side lip such that torque of the hub seal at the set rotation speed becomes a desired value; and manufacturing the hub seal such that the hub seal becomes a hub seal which has the designed shape of the side lip.

The method for manufacturing a hub seal according to one aspect of the present invention includes: obtaining a relationship between a position, in a radial direction orthogonal to an axis line, at which a foreign body entering an internal portion of a basic hub seal as a hub seal having a predetermined shape is positioned by rotation around the axis line, and a rotation speed of the rotation; and checking whether the position of the foreign body at the set rotation speed is the desired position in the obtained relationship between the position of the foreign body in the basic hub seal and the rotation speed.

The method for manufacturing a hub seal according to one aspect of the present invention includes: obtaining a relationship between a position, in a radial direction orthogonal to an axis line, at which a foreign body entering an internal portion of a changed basic hub seal is positioned by rotation around an axis line, the changed basic hub seal having a shape in which the shape of the basic hub seal is changed, and the rotation speed of the rotation; and checking whether the position of the foreign body at the set rotation speed is the desired position in the obtained relationship between the position of the foreign body in the changed basic hub seal and the rotation speed.

In the method for manufacturing a hub seal according to one aspect of the present invention, in the changed basic hub seal, a shape of a space in the basic hub seal on a side away from the space between the outer ring and the hub relative to the side lip is changed.

The method for manufacturing a hub seal according to one aspect of the present invention includes designing the side lip by adjusting at least any of a thickness of a tip end portion of the side lip, a thickness of a root portion of the side lip, and a length of the root portion of the side lip such that the torque of the hub seal at the set rotation speed becomes the desired value.

The method for manufacturing a hub seal according to one aspect of the present invention includes designing the side lip by adjusting at least any of a thickness of a tip end portion of the side lip of the basic hub seal, a thickness of a root portion of the basic side lip, and a length of the root portion of the basic side lip such that the torque of the hub seal at the set rotation speed becomes the desired value.

The method for manufacturing a hub seal according to one aspect of the present invention includes designing the side lip by adjusting at least any of a thickness of a tip end portion of the side lip of the changed basic hub seal, a thickness of a root portion of the changed basic side lip, and a length of the root portion of the changed basic side lip such that the torque of the hub seal at the set rotation speed becomes the desired value.

### Advantageous Effect of Invention

The method for manufacturing a hub seal according to the present invention can lower a limit, for maintaining needed seal performance, to reduction in torque of the hub seal.

### Brief Description of Drawings

[Figure 1] Figure 1 is a view illustrating one example of a hub seal to be manufactured by a method for manufacturing a hub seal according to the present invention.
[Figure 2] Figure 2 is an enlarged cross-sectional view illustrating a side lip of the hub seal illustrated in Figure 1 while enlarging the side lip.
[Figure 3] Figure 3 is a partially enlarged cross-sectional view of the side lip.
[Figure 4] Figure 4 is a cross-sectional view of a hub bearing in a cross section along the axis line for illustrating a usage state of the hub seal mounted on the hub bearing.
[Figure 5] Figure 5 is a partially enlarged cross-sectional view of the vicinity of the hub seal in Figure 4.
[Figure 6] Figure 6 is a schematic diagram for explaining a shake-off action, for foreign bodies, of the hub seal.
[Figure 7] Figure 7 is a diagram illustrating a graph representing a relationship between torque of the hub seal and a rotation speed of the hub seal and a relationship between a foreign-body surface position and the rotation speed of the hub seal.
[Figure 8] Figure 8 is a diagram illustrating a graph representing a relationship between torque of the hub seal and a rotational speed of the hub seal and a relationship between a foreign-body surface position and the rotation speed of the hub seal.
[Figure 9] Figure 9 is a cross-sectional view illustrating one example of a basic hub seal in a cross section of the basic hub seal along an axis line.
[Figure 10] Figure 10 is a partial cross-sectional view illustrating a side lip of the basic hub seal or a changed basic hub seal while enlarging the side lip.
[Figure 11] Figure 11 is a diagram illustrating a graph representing a relationship between a foreign-body surface position and the rotation speed, the relationship representing one example of foreign body shake-off performance which is observed to be not good in a checking step about the foreign body shake-off performance of the basic hub seal.
[Figure 12] Figure 12 is a diagram illustrating a graph representing a relationship between a thickness of a tip end portion of the side lip and torque performance.
[Figure 13] Figure 13 is a diagram illustrating a graph representing a relationship between a thickness of a root portion of the side lip and the torque performance.
[Figure 14] Figure 14 is a diagram illustrating a flowchart of a hub seal manufacturing process of manufacturing the hub seal.
[Figure 15] Figure 15 is a diagram illustrating a flowchart of the hub seal manufacturing process of manufacturing the hub seal.
[Figure 16] Figure 16 is a diagram illustrating a flowchart of the hub seal manufacturing process of manufacturing the hub seal.
[Figure 17] Figure 17 is a view illustrating another example of the hub seal to be manufactured by the method for manufacturing a hub seal according to the present invention.
[Figure 18] Figure 18 is a cross-sectional view of one example of an in-wheel motor unit for which the hub seal is used, the hub seal being manufactured by the method for manufacturing a hub seal according to the present invention.

### Description of Embodiments

Embodiments of the present invention will hereinafter be described in detail with reference to drawings.

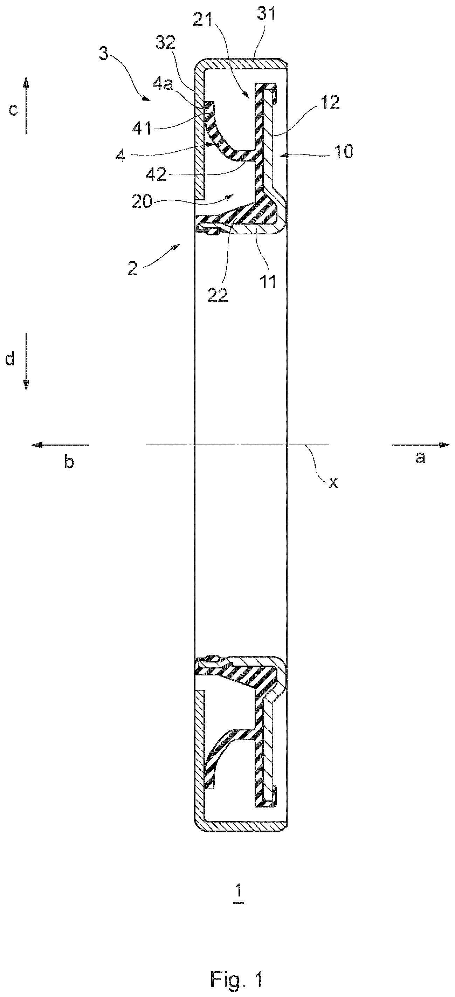

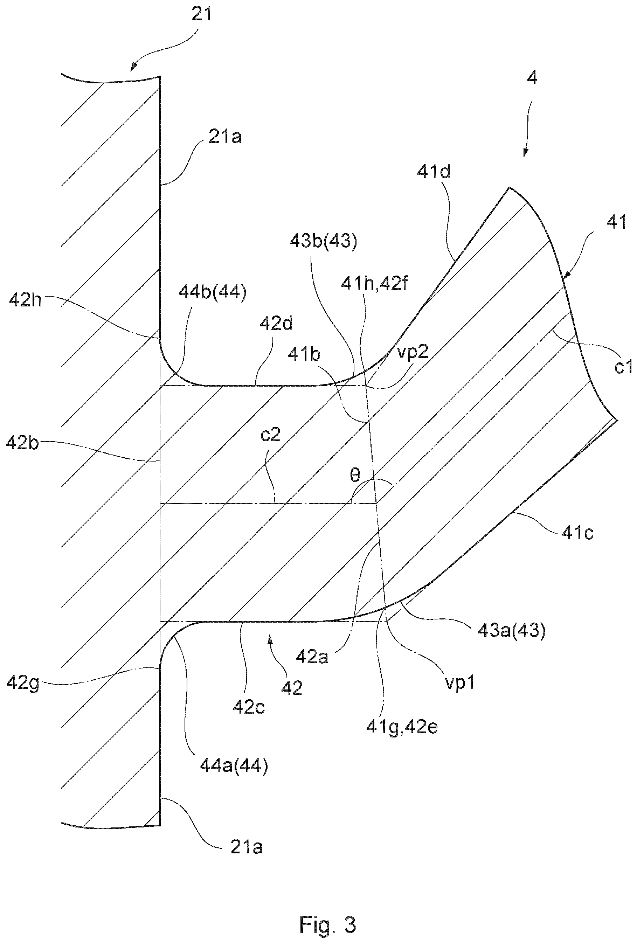

Figure 1 is a view illustrating one example of a hub seal to be manufactured by a method for manufacturing a hub seal according to the present invention and is a cross-sectional view in a cross section, along an axis line x, of a hub seal 1 to be manufactured by the method for manufacturing a hub seal according to the present invention. The hub seal to be manufactured by the method for manufacturing a hub seal according to the present invention is a sealing device that has a side lip and is intended for sealing of a space between an outer periphery side member and an inner periphery side member which is at least partially surrounded by the outer periphery side member, the outer periphery side member and the inner periphery side member being capable of relative rotation to each other. As specifically described later, the hub seal 1 to be manufactured by the method for manufacturing a hub seal according to the present invention is used for a hub bearing 50 for an automobile and is used for sealing a space between an outer ring 51 as the outer periphery side member and a hub 52 as the inner periphery side member, the outer periphery side member being capable of relative rotation about an axis line (see Figure 3). Note that a mounting target of the hub seal to be manufactured by the method for manufacturing a hub seal according to the present invention is not limited to a hub bearing for a vehicle such as an automobile, and the hub seal to be manufactured by the method for manufacturing a hub seal according to the present invention is applicable to other bearings, which are not a hub bearing for a vehicle, such as bearings to be used for industrial machines and general-purpose machines, and so forth, for example.

Hereinafter, for convenience of description, a side (one side in an axis line direction) of an arrow a (see Figure 1) direction in the axis line x direction is set as an outer side, and a side (the other side in the axis direction) of an arrow b (see Figure 1) direction in the axis line x direction is set as an inner side. More specifically, the outer side denotes a side in a direction moving away from the space between the outer ring 51 and the hub 52 as a sealing target space, and the inner side denotes a side in a direction moving close to the sealing target space in the axis x direction. Further, in a direction perpendicular to the axis line x (hereinafter, also referred to as a "radial direction"), a side in a direction moving away from the axis line x (arrow c direction in Figure 1) is set as an outer periphery side, and a side in a direction moving close to the axis line x (arrow d direction in Figure 1) is set as an inner periphery side.

As illustrated in Figure 1, the hub seal 1 includes a seal main body 2 as a first seal member to be mounted on the hub 52 as the rotating side of the hub bearing 50 and a sleeve 3 as a second seal member to be mounted on the outer ring 51 as the fixed side of the hub bearing 50. The seal main body 2 and the sleeve 3 are members which are annular around the axis line x. The seal main body 2 has the side lip 4 which is annular around the axis line x. The hub seal 1 is provided such that a foreign body such as rain water, muddy water, or dust which enters an internal portion of the hub seal 1 is positioned at a desired position in the radial direction by rotation, around the axis line, at a set rotation speed as a rotation speed which is set in advance. The set rotation speed is a practical rotation speed of the hub bearing 50 as the mounting target of the hub seal 1, which will be described later, for example. Further, the side lip 4 is designed to have such a shape that torque of the hub seal 1 at the set rotation speed becomes a desired value. Note that the torque of the hub seal 1 is torque which is necessary for rotating the hub seal 1 against sliding resistance (torque resistance) of the side lip 4 based on lip reaction force of the side lip 4, in other words, torque which is necessary for causing the seal main body 2 and the sleeve 3 to perform relative rotation. Hereinafter, a configuration of the hub seal 1 will specifically be described.

For example, as illustrated in Figure 1, the seal main body 2 includes a reinforcement ring 10 as a member which is annular around the axis line x and an elastic body portion 20 that is mounted on the reinforcement ring 10 and is formed with an elastic body which is annular around the axis line x. The elastic body portion 20 has the side lip 4. In the usage state, which will be described later, where the hub seal 1 is mounted on the hub bearing 50, the side lip 4 is a seal lip which is formed to contact the sleeve 3 from the outer side (arrow a direction side) and extends toward the inner side (arrow b direction side). Note that in Figure 1, the seal main body 2 and the sleeve 3 are illustrated in relative positions in the usage state.

For example, as illustrated in Figure 1, the reinforcement ring 10 is a member, which is formed of metal and has a circular ring shape or a generally circular ring shape which has the axis line x as a center or a general center, and is formed such that the hub 52 of the hub bearing 50 serving as the mounting target and described later is press-fitted into the reinforcement ring 10 and the reinforcement ring 10 is fitted into the hub 52 and fitted thereon. The reinforcement ring 10 has a tubular portion 11 as a portion which is tubular and is positioned on the inner periphery side and a circular ring portion 12 as a portion which is annular and extends from an end portion of the tubular portion 11 on the outer side to the outer periphery side, for example. The tubular portion 11 has such a shape that the hub 52 is fitted in the tubular portion 11 in an interference fit manner so that the reinforcement ring 10 is fitted on the hub 52 as described above. Further, the circular ring portion 12 has a portion having a circular ring shape or a generally circular ring shape which expands in parallel or generally parallel in the radial direction. The elastic body portion 20 is mounted on the reinforcement ring 10 substantially from the outer periphery side and the inner side, and the elastic body portion 20 is thereby reinforced. Note that a material of the reinforcement ring 10 is not limited to metal.

For example, as illustrated in Figure 1, the elastic body portion 20 has a base body portion 21 as a portion mounted on a portion, on the outer periphery side, of the circular ring portion 12 of the reinforcement ring 10 and a tubular-shaped portion 22 as a portion mounted on a portion, on the inner periphery side, of the circular ring portion 12 of the reinforcement ring 10 and the tubular portion 11. In the elastic body portion 20, the side lip 4 extends from the base body portion 21. The elastic body portion 20 is a member integrally formed of the same elastic material, and the side lip 4, the base body portion 21, and the tubular-shaped portion 22 are parts of the elastic body portion 20 which is integrally formed.

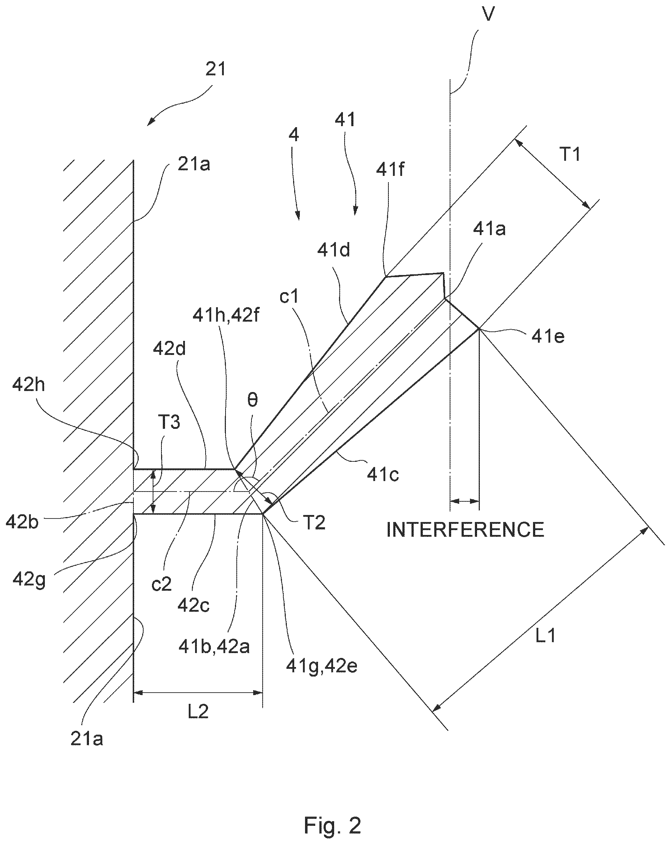

Figure 2 is an enlarged cross-sectional view illustrating while enlarging the side lip 4. In Figure 2, the side lip 4 is illustrated in a natural state where the side lip 4 does not contact the sleeve 3 and no external force is exerted. As illustrated in Figures 1 and 2, the side lip 4 extends from the base body portion 21 toward the inner side in an annular shape while having the axis line x as a center axis or a general center axis, a surface (inner peripheral surface 41c) facing the inner periphery side of the side lip 4 forms a contact surface 4a for sealing of the space between the outer ring 51 and the hub 52. Further, in the usage state of the hub seal 1, which will be described later, the side lip 4 is formed such that the contact surface 4a of a tip end portion 41 contacts a contact surface 33, which will be described later, of the sleeve 3 while having a predetermined interference.

As illustrated in Figures 1 and 2, the side lip 4 has the tip end portion 41 and a root portion 42. The root portion 42 is a portion connected with the base body portion 21 of the side lip 4, and the tip end portion 41 is a portion which is positioned on a tip end side (inner side) relative to the root portion 42 of the side lip 4. The root portion 42 extends in parallel or generally parallel with an axis x and has a cylindrical or generally cylindrical shape having the axis line x as a central axis or a generally central axis as illustrated in Figure 2, for example. The tip end portion 41 has a shape which has the axis line x as a central axis or a generally central axis and whose diameter is expanded as progress toward the inner side along the axis line x.

As illustrated in Figure 2, in a cross section of the tip end portion 41, a thickness of an end (tip end 41a) on the tip end side is a thickness T1, and a thickness of an end (rood end 41b) on a root end side is a thickness T2. Note that the root end 41b is a virtual end of the tip end portion 41. As illustrated in Figure 2, in the cross section, the tip end portion 41 extends along an extending direction line c1 as a virtual line and has a shape symmetrical or generally symmetrical with respect to the extending direction line c1. In other words, the inner peripheral surface 41c as the surface facing the inner periphery side of the tip end portion 41 and an outer peripheral surface 41d as a surface facing the outer periphery side of the tip end portion 41 are symmetrical or generally symmetrical with respect to the extending direction line c1. For example, as illustrated in Figure 2, the extending direction line c1 is a straight line which is inclined with respect to the axis line x to be inclined to the outer periphery side toward the inner side. Note that the extending direction line c1 does not have to be a straight line and may be a curve, a line in which a straight line and a curve are combined, or the like. Further, the inner peripheral surface 41c and the outer peripheral surface 41d partially do not have to be symmetrical with respect to the extending direction line c1 or do not have to be symmetrical with respect to the extending direction line c1.

The thicknesses T1 and T2 are widths between the inner peripheral surface 41c and the outer peripheral surface 41d in a direction orthogonal to the extending direction line c1. Specifically, for example, as illustrated in Figure 2, the thickness T1 is the width, in the direction orthogonal to the extending direction line c1, between an inner periphery tip end 41e as the tip end 41a in the inner peripheral surface 41c and an outer periphery tip end 41f as the tip end 41a in the outer peripheral surface 41d. Further, the thickness T2 is the width, in the direction orthogonal to the extending direction line c1, of an outer periphery root end 41h as the rood end 41b in the outer peripheral surface 41d.

Further, a length of the tip end portion 41 in a direction of the extending direction line c1 is a length L1. Specifically, for example, as illustrated in Figure 2, the length L1 of the tip end portion 41 is the length, in the direction of the extending direction line c1, between the inner periphery tip end 41e and an inner periphery root end 41g. Note that the inner periphery root end 41g is the root end 41b in the inner peripheral surface 41c. Further, the length L1 of the tip end portion 41 may be a length, in the direction of the extending direction line c1, between the outer periphery tip end 41f and the outer periphery root end 41h.

As illustrated in Figure 2, in a cross section of the rood portion 42, a thickness of the root portion 42 is a uniform thickness (thickness T3). The thickness of the root portion 42 may be generally uniform with respect to the thickness T3. As illustrated in Figure 2, in the cross section, the root portion 42 extends along an extending direction line c2 as a virtual line and has a shape symmetrical or generally symmetrical with respect to the extending direction line c2. In other words, an inner peripheral surface 42c as a surface facing the inner periphery side of the root portion 42 and an outer peripheral surface 42d as a surface facing the outer periphery side of the root portion 42 are symmetrical or generally symmetrical with respect to the extending direction line c2. For example, as illustrated in Figure 2, the extending direction line c2 is a straight line which is parallel or generally parallel with the axis line x. Note that the extending direction line c2 does not have to be a straight line and may be a curve, a line in which a straight line and a curve are combined, or the like. Further, the inner peripheral surface 42c and the outer peripheral surface 42d partially do not have to be symmetrical with respect to the extending direction line c2 or do not have to be symmetrical with respect to the extending direction line c2. Further, the extending direction line c2 may be inclined with respect to the axis line x.

The thickness T3 is a width between the inner peripheral surface 42c and the outer peripheral surface 42d in a direction orthogonal to the extending direction line c2. Specifically, for example, as illustrated in Figure 2, the thickness T3 is the width between an arbitrary point on the inner peripheral surface 42c or the outer peripheral surface 42d and a point on the outer peripheral surface 42d or the inner peripheral surface 42c, the point being opposed to the above point in the direction orthogonal to the extending direction line c2. The thickness T3 may be the width, in the direction orthogonal to the extending direction line c2, between an inner periphery root end 42g as an end (root end 42b) in the inner peripheral surface 42c on the base body portion 21 side and an outer peripheral root end 42h as the root end 42b in the outer peripheral surface 42d, and the thickness T3 may be the width, in the direction orthogonal to the extending direction line c2, between an inner periphery tip end 42e as an end (tip end 42a) in the inner peripheral surface 42c on the tip end portion 41 side and an outer periphery tip end 42f as the tip end 42a in the outer peripheral surface 42d. Note that the tip end 42a and the root end 42b are virtual ends of the root portion 42.

Further, a length of the root portion 42 in a direction of the extending direction line c2 is a length L2. Specifically, for example, as illustrated in Figure 2, the length L2 of the root portion 42 is the length, in the direction of the extending direction line c2, between the inner periphery tip end 42e and the inner periphery root end 42g. Further, the length L2 of the root portion 42 may be a length, in the direction of the extending direction line c2, between the outer periphery tip end 42f and the outer periphery root end 42h.

As illustrated in Figure 3, between the tip end portion 41 and the root portion 42, a transition portion 43 may be formed such that the tip end portion 41 and the root portion 42 are smoothly connected. Further, as illustrated in Figure 3, between the root portion 42 and the base body portion 21, a transition portion 44 may be formed such that the root portion 42 and the base body portion 21 are smoothly connected. Specifically, as illustrated in Figure 3, the transition portion 43 includes an inner periphery transition surface 43a as a surface, which connects the inner peripheral surface 41c of the tip end portion 41 with the inner peripheral surface 42c of the root portion 42, and an outer periphery transition surface 43b as a surface, which connects the outer peripheral surface 41d of the tip end portion 41 with the outer peripheral surface 42d of the root portion 42. For example, as illustrated in Figure 3, in a cross section, the inner periphery transition surface 43a has a shape which forms a curve protruding to the inner periphery side. For example, as illustrated in Figure 3, in the cross section, the outer periphery transition surface 43b has a shape which forms a curve recessed to the inner periphery side.

Specifically, as illustrated in Figure 3, the transition portion 44 includes an inner periphery transition surface 44a as a surface, which connects the inner peripheral surface 42c of the root portion 42 with an inner side surface 21a of the base body portion 21, and an outer periphery transition surface 44b as a surface, which connects the outer peripheral surface 42d of the root portion 42 with the inner side surface 21a of the base body portion 21. For example, as illustrated in Figure 3, in the cross section, the inner periphery transition surface 44a has a shape which forms a curve recessed to the outer periphery side. For example, as illustrated in Figure 3, in the cross section, the outer periphery transition surface 44b has a shape which forms a curve recessed to the inner periphery side.

In this case, for example, as illustrated in Figure 3, in the cross section, the root end 41b of the tip end portion 41 and the tip end 42a of the root portion 42 pass through a virtual intersection point vp1 between a virtual extension line of the inner peripheral surface 41c of the tip end portion 41 and a virtual extension line of the inner peripheral surface 42c of the root portion 42 and a virtual intersection point vp2 between a virtual extension line of the outer peripheral surface 41d of the tip end portion 41 and a virtual extension line of the outer peripheral surface 42d of the root portion 42.

As illustrated in Figure 2, in the tip end portion 41, for example, the thickness T1 is larger than the thickness T2, the tip end portion 41 has such a shape that the thickness of the tip end portion 41 becomes thicker as progress from the root end 41b toward the tip end 41a along the extending direction line c1. Note that in the cross section, the thickness of the tip end portion 41 is a width between the inner peripheral surface 41c and the outer peripheral surface 41d in the direction orthogonal to the extending direction line c1. Further, as illustrated in Figure 2, an angle (bent angle θ) between the extending direction line c1 and the extending direction line c2 is an angle which is larger than 90° and smaller than 180° (90° < θ < 180°).

Further, as illustrated in Figure 2, in the rood portion 42, the thickness T3 is uniform throughout the length L2, for example. Further, the thickness T3 of the root portion 42 is smaller than the thickness T2 of the root end 41b of the tip end portion 41, for example. Note that the thickness T3 of the root portion 42 may be larger than the thickness T2 of the root end 41b of the tip end portion 41.

The side lip 4 has the above-described shape, and in the usage state described later, a portion, on the tip end 41a side, of the inner peripheral surface 41c of the tip end portion 41 contacts the contact surface 33 of the sleeve 3 in the interference (contact surface 4a) having a predetermined size and thereby generates the reaction force (lip reaction force) of a predetermined magnitude. The interference of the seal lip has a length in which the seal lip in a free state, which is not deformed by external force, projects relatively to a contact surface that the seal lip contacts in the usage state. Specifically, the interference of the side lip 4 has a length, in the axis line x direction, of a portion of the inner peripheral surface 41c of the tip end portion 41 of the side lip 4, the portion protruding relatively to the contact surface 33 of the sleeve 3 as a contact surface indicated by a virtual line V in Figure 2.

Further, the side lip 4 has the above-described shape and exhibits a desired shake-off action in the usage state as described later. The shake-off action is an action to move a foreign body entering an inside of the hub seal 1, particularly, a liquid foreign body from the side lip 4 to the outer periphery side by centrifugal force generated by rotation around the axis line x.

The elastic body portion 20 is integrally mounted on the reinforcement ring 10, and the above-described side lip 4 and base body portion 21 are portions of the elastic body portion 20 integrally formed of the same material and are integrally continuous.

For example, as illustrated in Figure 1, the sleeve 3 is a member, which is formed of metal and has a circular ring shape or a generally circular ring shape which has the axis line x as a center or a general center, and is formed such that the sleeve 3 is press-fitted into the outer ring 51 of the hub bearing 50 serving as the mounting target and described later and the sleeve 3 is fitted into the outer ring 51 and fitted thereon. The sleeve 3 has a tubular portion 31 as a portion which is tubular and is positioned on the outer periphery side and a circular ring portion 32 as a portion which has a circular ring shape or a generally circular ring shape and extends from an end portion of the tubular portion 31 on the inner side to the inner periphery side, for example. The tubular portion 31 has such a shape that the tubular portion 31 is fitted in the outer ring 51 in the interference fit manner so that the sleeve 3 is fitted on the outer ring 51 as described above. Further, the circular ring portion 32 has a portion having a circular ring shape or a generally circular ring shape which expands in parallel or generally parallel in the radial direction. In the circular ring portion 32, the contact surface 33 as a surface that the side lip 4 contacts in the usage state described later is formed. The contact surface 33 is a surface in the circular ring portion 32, which faces the outer side, and is a flat surface or a generally flat surface which expands in parallel or generally parallel with a flat surface orthogonal or generally orthogonal to the axis line x and is annular around the axis line x. Note that a material of the sleeve 3 is not limited to metal.

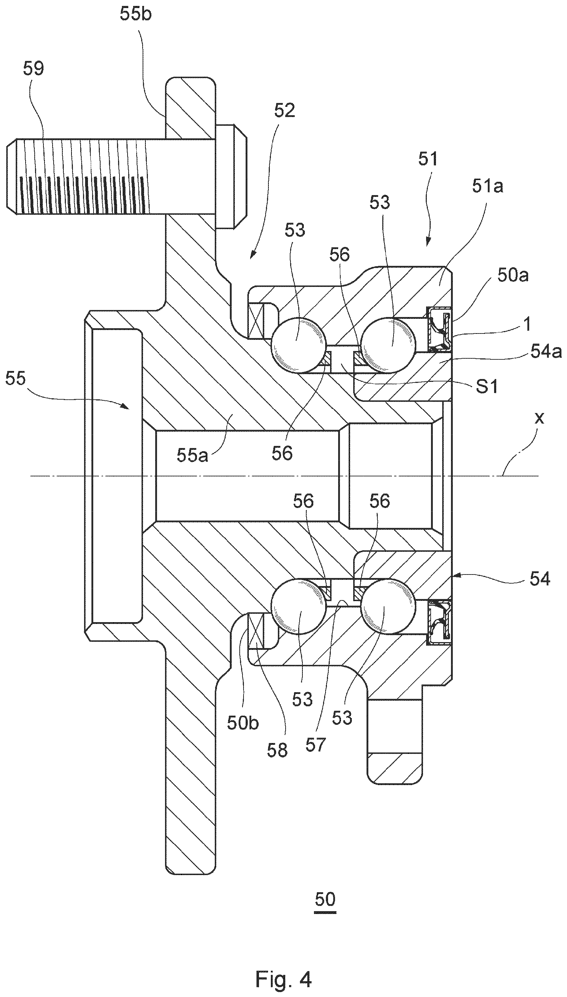

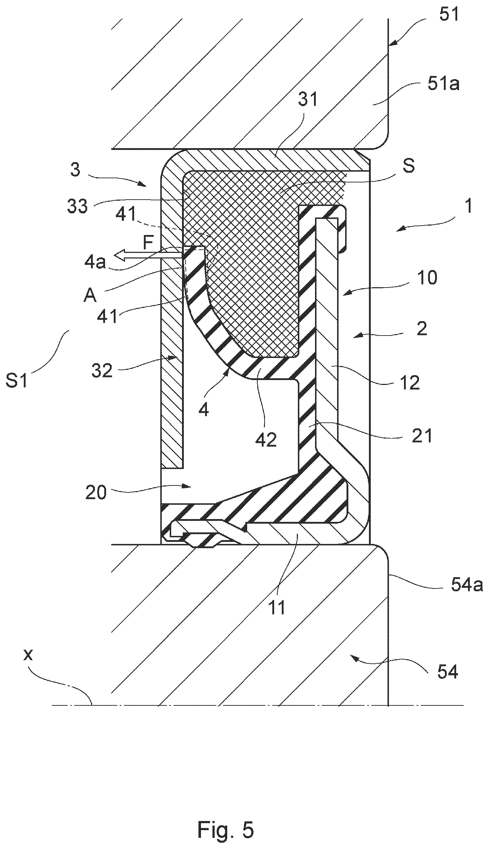

Next, the above-described usage state of the hub seal 1 will be described. Figure 4 is a cross-sectional view of the hub bearing 50 in a cross section along the axis line x for illustrating the usage state of the hub seal 1 mounted on the hub bearing 50, and Figure 5 is a partially enlarged cross-sectional view of the vicinity of the hub seal 1 in Figure 4. Note that in illustrated examples, an axis line of the hub bearing 50 agrees with the axis line x of the hub seal 1, and the hub bearing 50 has the axis line x common to the hub seal 1.

As illustrated in Figure 4, the hub bearing 50 is a hub bearing which has been known in related art, is a hub bearing of an inner ring rotation type, is provided in a vehicle or the like such as an automobile, and rotatably supports a wheel on an axle or a suspension device. Specifically, as illustrated in Figure 4, the hub bearing 50 includes the outer ring 51, as an outer periphery side member, which is annular and has the axis line x as a central axis or a generally central axis, the hub 52, as an inner periphery side member, which is capable of relative rotation to the outer ring 51, is partially surrounded by the outer ring 51, and has the axis line x as a central axis or a generally central axis, and a plurality of bearing balls 53 which are disposed in two lines between the outer ring 51 and the hub 52. In the usage state of the hub bearing 50 mounted on a vehicle or the like, the outer ring 51 is fixed to a suspension device of the vehicle, for example, and the hub 52 becomes capable of relative rotation to the outer ring 51. Specifically, the hub 52 has the inner ring 54 and a hub ring 55, and the hub ring 55 has a shaft portion 55a which is generally cylindrical and extends along the axis line x and a wheel-mounting flange 55b. The wheel-mounting flange 55b is a portion which expands in a circular ring shape from one end of the shaft portion 55a on the outer side toward the outer periphery side and is a portion on which a wheel not illustrated is mounted by a plurality of hub bolts 59. In order to retain the bearing balls 53 in a space between the outer ring 51 and the hub 52, the inner ring 54 is fitted to an end portion, on the inner side, of the shaft portion 55a of the hub ring 55. In the sealed space S1 as the space between the outer ring 51 and the hub 52, the bearing balls 53 are retained by a retainer 56.

The outer ring 51 has a through hole 57 extending in the axis line x direction, the shaft portion 55a of the hub ring 55 of the hub 52 is inserted into the through hole 57, and the sealed space S1 which is annular and extends along the axis line x is formed between the shaft portion 55a and the through hole 57. Further, a lubricant is applied or injected into the sealed space S1. The hub seal 1 is mounted on an inner side opening portion 50a of the hub bearing 50, which forms an opening through which a space between the shaft portion 55a and the through hole 57 is opened to the inner side, and another sealing device 58 is mounted on an outer side opening portion 50b of the hub bearing 50, which forms an opening through which the space between the shaft portion 55a and the through hole 57 is opened to the outer side. Sealing of a space between the shaft portion 55a and inner ring 54 and the through hole 57 is intended by the hub seal 1 and the sealing device 58, prevention of leakage of the lubricant in this sealed space S1 to an outside is intended, and prevention of entry of foreign bodies such as rain water, muddy water, and dust from the outside to an internal portion is intended. The sealing device 58 is a sealing device which has been known in related art, and a detailed description thereof will not be made. Note that as the sealing device 58, the hub seal 1 can be applied. A configuration of a hub bearing to which the hub seal 1 is applied is not limited to a configuration of the above-described hub bearing 50.

As illustrated in Figures 4 and 5, specifically, the sleeve 3 of the hub seal 1 is mounted on an end portion 51a, which is cylindrical, of the outer ring 51 on the inner side, the reinforcement ring 10 of the seal main body 2 of the hub seal 1 is mounted on the end portion 54a, which is cylindrical, of the inner ring 54 of the hub 52 on the inner side, and the hub seal 1 is thereby mounted on the hub bearing 50. Specifically, the tubular portion 31 is press-fitted in the inner side opening portion 50a of the outer ring 51 to be fitted thereon, and the sleeve 3 is thereby fixed to the outer ring 51. Further, the end portion 54a of the inner ring 54 is press-fitted in the tubular portion 11 of the reinforcement ring 10, the reinforcement ring 10 is fitted on the inner ring 54, and the seal main body 2 is thereby fixed to the inner ring 54.

In the usage state, the seal main body 2 and the sleeve 3 are positioned such that an interval in the axis line x direction becomes a predetermined interval, a portion, on a tip end side, of the inner peripheral surface 41c of the tip end portion 41 of the side lip 4 slidably contacts the contact surface 33 of the sleeve 3 in a portion (contact surface 4a) corresponding to the above-described predetermined interference. By the side lip 4, prevention of entry of foreign bodies into the sealed space S1 is intended, and prevention of outflow of the lubricant from an inside of the sealed space S1 is intended. Note that in the hub seal 1, grease may be applied to the inner peripheral surface 41c of the side lip 4, and in the usage state, the grease (not illustrated) may thereby be interposed between the contact surface 4a of the side lip 4 and the contact surface 33 of the circular ring portion 32 of the sleeve 3.

As described above, in the usage state, the side lip 4 contacts, in the contact surface 4a, the contact surface 33 of the sleeve 3 in the predetermined interference, and the reaction force (lip reaction force F) based on this contact is generated for the side lip 4. As illustrated in Figure 5, in the usage state of the hub seal 1, the lip reaction force F of the side lip 4 is force, in the axis line x direction, that the side lip 4 exerts on the contact surface 33 of the circular ring portion 32 of the sleeve 3. The lip reaction force F of the side lip 4 serves as torque resistance against rotation of the hub seal 1. In other words, the torque of the hub seal 1 is a value corresponding to the lip reaction force F of the side lip 4. As examples of factors defining the lip reaction force F of the side lip 4, the length L1 of the tip end portion 41 of the side lip 4, the thicknesses T1 and T2 of the tip end portion 41 of the side lip 4, the thickness T3 of the root portion 42 of the side lip 4, the bent angle θ of the side lip 4, and surface roughness of the inner peripheral surface 41c of the tip end portion 41 of the side lip 4, which are illustrated in Figure 2, are raised.

The lip reaction force F of the side lip 4 changes in accordance with a rotation speed of the hub 52. This is because force in a direction to move the side lip 4 away from the contact surface 33 of the sleeve 3 is generated by centrifugal force which is exerted on the side lip 4 of the seal main body 2, which rotates around the axis line x together with the hub 52, when the hub 52 rotates. The centrifugal force exerted on the side lip 4 becomes larger as the rotation speed of the hub 52 (seal main body 2) becomes higher, in association with that, the force in the direction to move the side lip 4 away from the contact surface 33 of the sleeve 3 becomes larger, and the lip reaction force F of the side lip 4 thereby becomes smaller as the rotation speed of the hub 52 becomes higher. When the rotation speed of the hub 52 becomes higher than a predetermined rotation speed, the force in the direction to move the side lip 4 away from the contact surface 33 of the sleeve 3 reaches a magnitude at which the side lip 4 is moved completely away from the contact surface 33 of the sleeve 3, and the side lip 4 moves away from the contact surface 33 of the sleeve **3.**

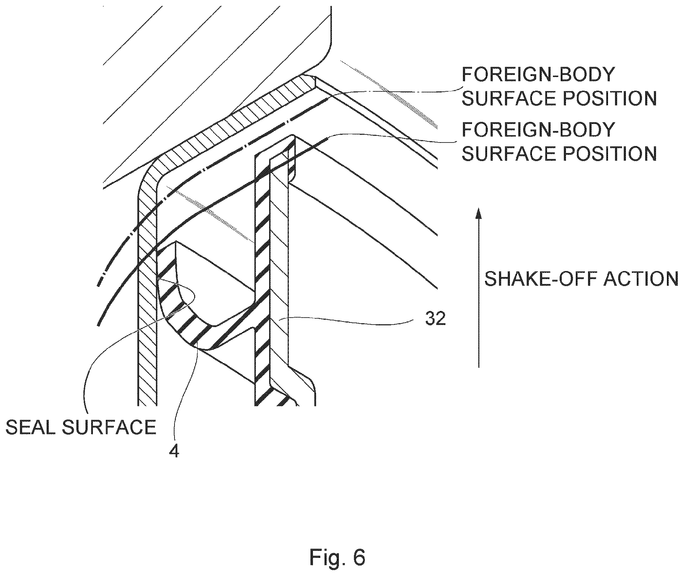

Meanwhile, a shake-off action occurs in the hub seal 1 by centrifugal force generated by rotation of the hub 52. As illustrated in Figure 6, the shake-off action is an action to move a foreign body entering an inside of the hub seal 1, particularly, a liquid foreign body from the side lip 4 side to the outer periphery side. A foreign-body surface position as a position, at which a foreign body pushed to the outer periphery side by the shake-off action is positioned, changes in accordance with the rotation speed of the hub 52 (seal main body 2). The shake-off action for a foreign body occurs when the hub 52 rotates at a higher rotation speed than a predetermined rotation speed. Further, in a region of a higher rotation speed than this predetermined rotation speed, as the rotation speed of the hub 52 becomes higher, an extent of the shake-off action becomes stronger, and the foreign-body surface position becomes a position further on the outer periphery side, in other words, a position further away from the side lip 4 in the radial direction from the axis line x**.** As illustrated in Figure 6, the foreign-body surface position is positioned at a position of a seal surface A in the radial direction up to the predetermined rotation speed of the rotation speed of the hub 52, and when the hub 52 (seal main body 2) rotates at a higher rotation speed than the predetermined rotation speed, the foreign-body surface position moves to the outer periphery side in the radial direction. Note that the seal surface A includes the contact surface 4a of the side lip 4 and the contact surface 33 of the sleeve 3 (see Figure 5).

The extent of the shake-off action differs depending on the form of the space (upstream space S) in the hub seal 1 on the side away from the sealed space S1 relatively to the side lip 4. The upstream space S is a portion indicated by a mesh pattern in Figure 5 and is a space which is formed between the seal main body 2 and the sleeve 3 on an upstream side relative to the side lip 4.

In the hub seal 1, at the practical rotation speed of the hub bearing 50, based on a relationship between the lip reaction force F of the side lip 4, which changes in accordance with the rotation speed of the hub 52 due to an action of the centrifugal force, and the foreign-body surface position, which changes in accordance with the rotation speed of the hub 52 due to the action of the centrifugal force, the lip reaction force F in a case where the hub bearing 50 stands still is set, and reduction in the torque resistance of rotation of the hub seal 1 in a range of the practical rotation speed is intended. Further, a shape of the upstream space S of the hub seal 1 is defined based on a relationship between the lip reaction force F of the side lip 4, which changes in accordance with the rotation speed of the hub seal 1 due to the action of the centrifugal force, and the foreign-body surface position, which changes in accordance with the rotation speed of the hub seal 1 due to the action of the centrifugal force so that even when the lip reaction force F becomes low in the range of the practical rotation speed and seal performance of the side lip 4 lowers, the shake-off action for a foreign body, which prevents the foreign body from entering the sealed space S1 side beyond the side lip 4, occurs.

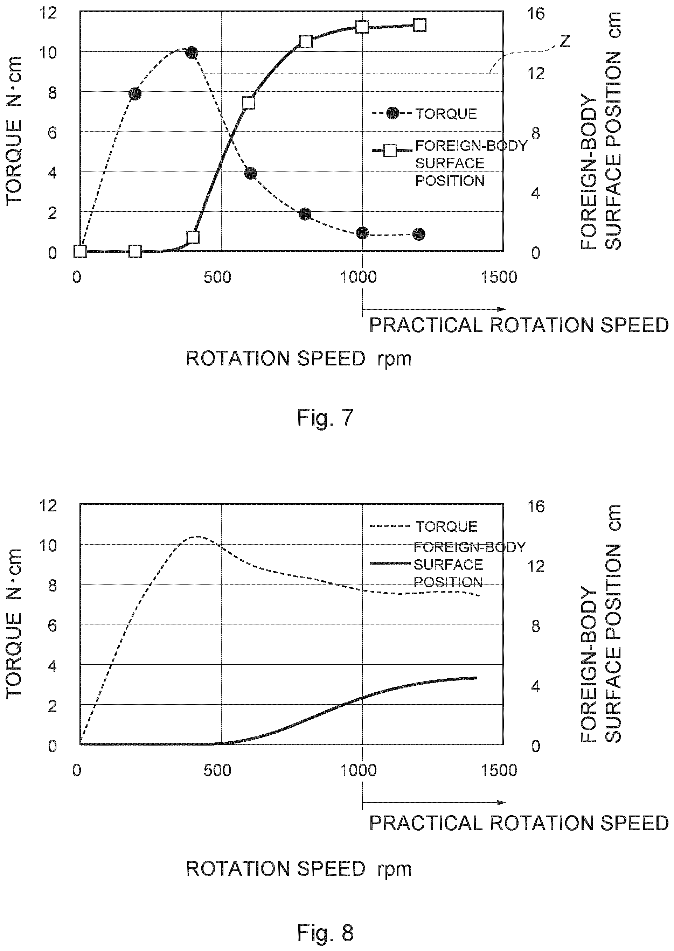

In the hub seal 1, the shape of the side lip 4 is such a shape that a relationship between the torque of the hub seal 1 and the rotation speed of the hub seal 1 (seal main body 2) becomes a relationship as represented by a graph in Figure 7, for example. Further, in the hub seal 1, the shape of the upstream space S is such a shape that a relationship between the foreign-body surface position and the rotation speed of the hub seal 1 becomes a relationship as represented by the graph in Figure 7, for example. Note that in Figure 7, the foreign-body surface position is represented by a distance from the seal surface A (see Figure 5) in the radial direction. Further, the practical rotation speed of the hub bearing 50 is equal to or higher than 1,000 rpm, for example.

As illustrated in Figure 7, at the practical rotation speed of the hub bearing 50, the hub seal 1 can sufficiently push the foreign-body surface position to the outer periphery side by the shake-off action. Accordingly, at the practical rotation speed of the hub bearing 50, the foreign-body surface position is high, and no foreign body is present in the vicinity of the seal surface A, or few foreign bodies are present in the vicinity of the seal surface A. Thus, as illustrated in Figure 7, at the practical rotation speed of the hub bearing 50, the side lip 4 can be provided in which the lip reaction force F lowers by the action of the centrifugal force, and the torque of the hub seal 1 can be reduced. Because no foreign body is present in the vicinity of the seal surface A, or few foreign bodies are present in the vicinity of the seal surface A, even when in a case where the foreign-body surface position is present in the vicinity of the seal surface A, the lip reaction force F of the side lip 4 becomes so low that entry of the foreign body is allowed, the foreign body does not enter the sealed space S1 side beyond the side lip 4, and seal performance of the hub seal 1 does not become lower than desired seal performance.

On one hand, when the hub bearing 50 rotates at a lower rotation speed than the practical rotation speed, a situation occurs where the extent of the shake-off action lowers, the foreign-body surface position becomes close to the position of the seal surface A or is positioned at the seal surface A, the foreign-body surface position is low, and the foreign body is present in the vicinity of the seal surface A. On the other hand, as illustrated in Figure 7, when the hub bearing 50 rotates at a lower rotation speed than the practical rotation speed, the lip reaction force F is higher than the lip reaction force F at the practical rotation speed such that sufficient seal performance can be retained. Thus, even in a rotation region of the hub bearing 50 in which the extent of the shake-off action is low and the foreign-body surface position becomes low, the foreign body does not enter the sealed space S1 side beyond the side lip 4, and the seal performance of the hub seal 1 does not become lower than the desired seal performance.

As described above, the hub seal 1 is provided such that at the practical rotation speed of the hub bearing 50, the foreign-body surface position is positioned sufficiently on the outer periphery side relative to the seal surface A by the shake-off action and the foreign-body surface position is positioned at a high position; however, depending on a form of the hub seal 1, as illustrated in Figure 8, there can be cases where at the practical rotation speed of the hub bearing 50, only the shake-off action to the extent that the foreign-body surface position is pushed to a lower position than a case in Figure 7 is obtained. In this case, as illustrated in Figure 8, the shape of the side lip 4 may be defined such that the lip reaction force F becomes a value sufficient for obtaining the desired seal performance and the lip reaction force F becomes higher than the case in Figure 7.

As described above, the hub seal 1 can lower a limit, for maintaining needed seal performance, to reduction in the lip reaction force F of the side lip 4. Thus, the hub seal 1 can lower a limit, for maintaining the needed seal performance, to reduction in the torque of the hub seal 1. Accordingly, the hub seal 1 can reduce the torque resistance given by the side lip 4 and can reduce the torque of the hub seal 1.

Next, the method for manufacturing a hub seal according to the present invention will be described. The method for manufacturing a hub seal according to the present invention is a method for manufacturing a hub seal, like the above-described hub seal 1, that can lower the limit, for maintaining needed seal performance, to reduction in lip reaction force of a side lip**.** In the method for manufacturing a hub seal according to an embodiment of the present invention, the method being for manufacturing the above-described hub seal 1, the set rotation speed is set which is a rotation speed at which a foreign body entering the upstream space S of the hub seal 1 is positioned at a desired foreign-body surface position in the radial direction by rotation of the hub seal 1 around the axis line x, the shape of the side lip 4 is designed such that the torque of the hub seal 1 at the set rotation speed becomes the desired value, and the hub seal is manufactured such that the hub seal 1 is provided which has the designed shape of the side lip 4. Note that as described above, the set rotation speed is the practical rotation speed of the hub bearing 50 as the mounting target of the hub seal 1, for example. Hereinafter, the method for manufacturing a hub seal according to the embodiment of the present invention will specifically be described.

In the method for manufacturing a hub seal according to the embodiment of the present invention, a basic hub seal 5 having a basic form is first designed. The basic form is defined based on shapes and sizes demanded for a hub seal to be manufactured, requested performance values, and so forth. The demanded shapes and sizes are shapes and sizes which are requested based on spaces in the mounting target such as a hub bearing on which the hub seal to be manufactured is mounted, for example. Further, one of the requested performance values is a requested torque value of the hub seal to be manufactured. The requested torque value of the hub seal is a requested value of torque necessary for rotating the hub seal and is a requested value of torque necessary for causing the seal main body 2 and the sleeve 3 to perform relative rotation to each other against the torque resistance based on the lip reaction force F of the side lip. Specifically, the requested torque value of the hub seal is a maximum value of the torque (maximum torque) which is needed for rotating the hub seal in a range of a practical rotation speed of the mounting target. The maximum torque is 10 N·cm at the practical rotation speed equal to or higher than 1,000 rpm, for example.

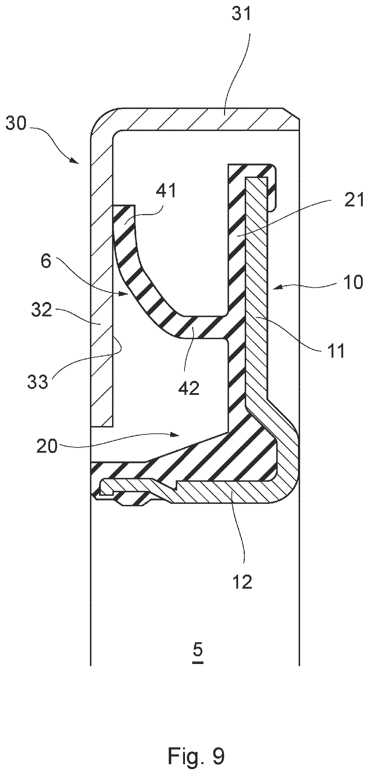

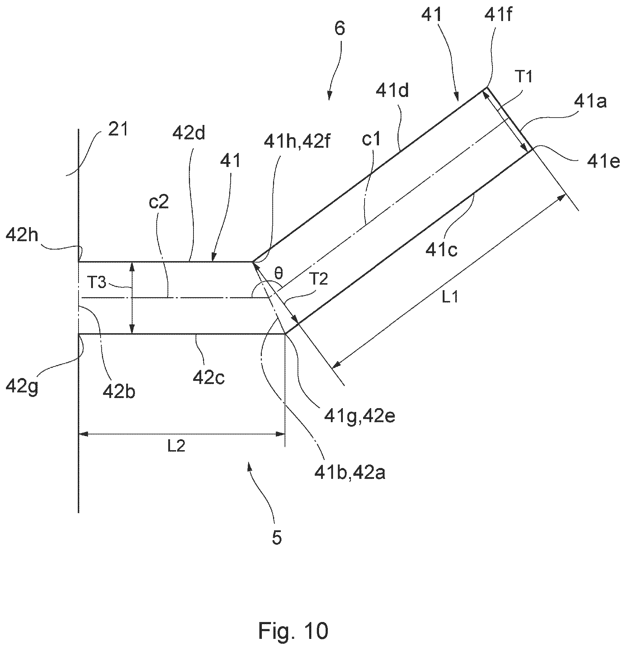

Figure 9 is a cross-sectional view illustrating one example of the basic hub seal 5 in a cross section of the basic hub seal 5 along the axis line x, and Figure 10 is a partial cross-sectional view illustrating the side lip 6 of the basic hub seal 5 while enlarging the side lip 6. Only the cross section on one side with respect to the axis line x is illustrated in Figure 9. Further, in Figure 9, the seal main body 2 and the sleeve 3 are illustrated in the relative positions in the usage state. The basic hub seal 5 is different only in the shape of the side lip from the above-described hub seal 1 and has the side lip 6 in which the thickness of the tip end portion 41 is uniform throughout the length L1 as illustrated in Figures 9 and 10. Sizes and shapes of the reinforcement ring 10 and the sleeve 3 of the basic hub seal 5 are sizes and shapes corresponding to a space on which the hub seal of the hub bearing 50 as the mounting target is mounted.

When the basic hub seal 5 is designed, the extent of the shake-off action for a foreign body (foreign body shake-off performance) of the designed basic hub seal 5 is checked. In a check on the foreign body shake-off performance, a relationship, as illustrated in Figure 7, between the foreign-body surface position and the rotation speed of the hub seal 1 (a rotation speed of the relative rotation between the seal main body 2 and the sleeve 3) in the basic hub seal 5 is checked. The check on the foreign body shake-off performance is performed by mounting the basic hub seal 5 on the hub bearing 50, rotating the hub bearing 50 (relative rotation between the outer ring 51 and the hub 52), and checking the foreign-body surface position at each rotation speed. The check on the foreign body shake-off performance may be performed by mounting the basic hub seal 5 on a jig imitating the hub bearing 50. Further, a relationship between the foreign-body surface position and the rotation speed of the hub seal or the rotation speed of the hub is expressed by a mathematical expression, the foreign body shake-off performance of the hub seal 5 is calculated based on the mathematical expression, and the check on the foreign body shake-off performance may thereby be performed. Further, the check on the foreign body shake-off performance may be performed by a computer analysis and may be performed in a different method from the above-described method.

When the foreign body shake-off performance of the basic hub seal 5, which has been checked, is predetermined good performance, the manufacturing moves to adjustment of and a check on torque performance of the basic hub seal 5. In a case where in the range of the practical rotation speed equal to or higher than 1,000 rpm, the foreign-body surface position is at a sufficient height, for example, it is determined that the foreign body shake-off performance is good foreign body shake-off performance. For example, as illustrated in the graph in Figure 7, when in the range of the practical rotation speed equal to or higher than 1,000 rpm, the foreign-body surface position is at a height equal to or higher than a reference position Z (Z is 12 cm, for example) as a predetermined radial-direction position, it is determined that the foreign body shake-off performance of the basic hub seal 5 is good.

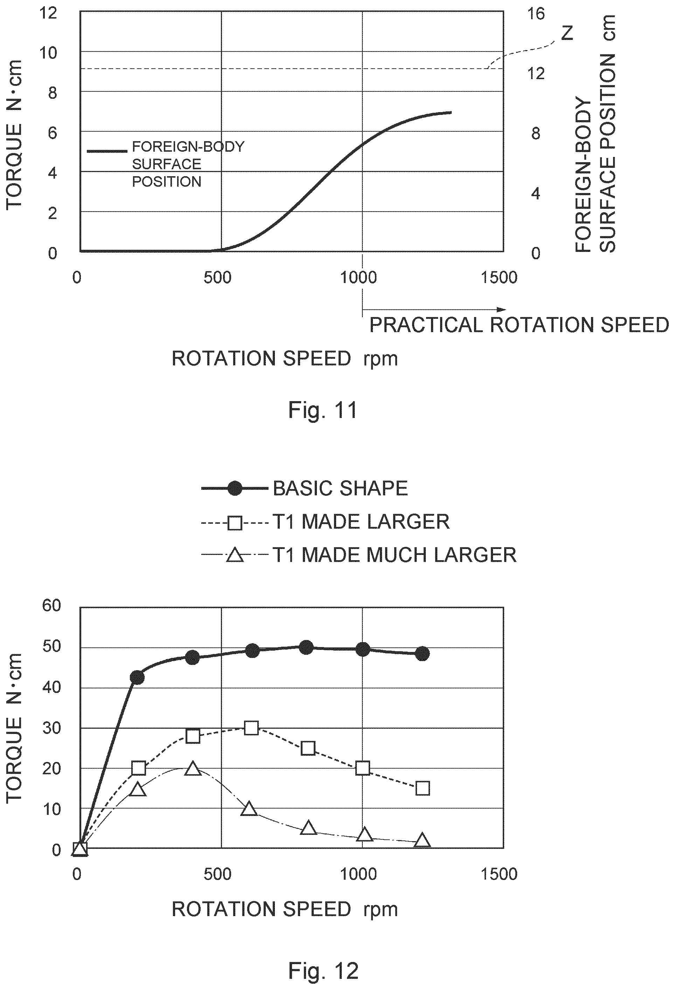

On the other hand, in a case where the foreign body shake-off performance of the basic hub seal 5, which has been checked, is not the predetermined good performance, the manufacturing does not move to the adjustment of and the check on the torque performance of the basic hub seal 5, and redesign of the basic hub seal 5 is performed so as to improve the foreign body shake-off performance of the basic hub seal 5. In a case where in the range of the practical rotation speed equal to or higher than 1,000 rpm, the foreign-body surface position is not at the sufficient height, for example, the foreign body shake-off performance cannot be considered to be good foreign body shake-off performance. For example, as illustrated in a graph in Figure 11, when in the range of the practical rotation speed equal to or higher than 1,000 rpm, the foreign-body surface position is lower than the reference position Z (Z is 12 cm, for example) as the predetermined radial-direction position, it is determined that the foreign body shake-off performance of the basic hub seal 5 is not good.

Redesign of the basic hub seal 5 for improving the foreign body shake-off performance of the basic hub seal 5 is performed by changing a structure which influences the foreign body shake-off performance of the basic hub seal 5 and by designing a changed basic hub seal in which the structure influencing the foreign body shake-off performance of the basic hub seal 5 is changed. The structure influencing the foreign body shake-off performance of the basic hub seal 5 is the shape of the upstream space S of the basic hub seal 5, for example. Then, similarly to the above-described check on the foreign body shake-off performance of the basic hub seal 5, a check on the foreign body shake-off performance is performed for the changed basic hub seal. In a case where the foreign body shake-off performance of the changed basic hub seal, which has been checked, is the predetermined good performance, the manufacturing moves to adjustment of and a check on torque performance of the changed basic hub seal. On the other hand, in a case where the foreign body shake-off performance of the changed basic hub seal, which has been checked, is not the predetermined good performance, similarly to the redesign of the basic hub seal 5, redesign of the changed basic hub seal is performed so as to improve the foreign body shake-off performance of the changed basic hub seal, and a new changed basic hub seal is designed. In such a manner, the redesign of the changed basic hub seal is repeated until the foreign body shake-off performance of the new changed basic hub seal, which has been redesigned, becomes the predetermined good performance.

The adjustment of and the check on torque performance is performed for the basic hub seal 5 or the changed basic hub seal, whose foreign body shake-off performance is determined to be the predetermined good foreign body shake-off performance. An adjustment-check step about the torque performance is a step of adjusting a form factor of the side lip 6, which influences the torque performance of the basic hub seal 5 or the changed basic hub seal, and of checking whether or not the torque performance of the basic hub seal 5 or the changed basic hub seal, which has the adjusted side lip 6, satisfies the above-described requested torque value. Note that the torque performance of the hub seal is based on the relationship between the rotation speed of the hub seal and the torque necessary for rotation of the hub seal at each rotation speed. The lip reaction force F of the side lip serves as the torque resistance against rotation of the hub seal and influences the torque performance of the hub seal. Thus, a form factor of the side lip which influences the lip reaction force F of the side lip serves as the form factor of the side lip 6 which influences the torque performance of the hub seal. As described above, as examples of factors of the side lip 6 which define the lip reaction force F of the side lip 6, the length L1 of the tip end portion 41 of the side lip 6, the thicknesses T1 and T2 of the tip end portion 41 of the side lip 6, the thickness T3 of the root portion 42 of the side lip 6, a bent angle θ of the side lip 6, and the surface roughness of the inner peripheral surface 41c of the tip end portion 41 of the side lip 4 are raised (see Figure 10), and those are examples of the form factor of the side lip, which influences the torque performance of the hub seal.

In the adjustment-check step about the torque performance, a shape of the side lip 6 is adjusted from a basic shape by adjusting the above-described form factor defining the lip reaction force F of the side lip 6, and whether or not the torque performance of the basic hub seal 5 or the changed basic hub seal, which has the side lip 6 whose shape is adjusted, satisfies the above-described requested torque value is checked. The lip reaction force F of the side lip 6, at each rotation speed, of the basic hub seal 5 or the changed basic hub seal can be calculated by a computer analysis, and torque of the basic hub seal 5 or the changed basic hub seal is calculated or estimated from the lip reaction force F at each rotation speed, which is calculated by the computer analysis. The lip reaction force F of the side lip 6 at each rotation speed may be acquired by mounting the basic hub seal 5 or the changed basic hub seal on the hub bearing 50, rotating the hub bearing 50, and measuring the lip reaction force F at each rotation speed. Further, measurement of the lip reaction force F of the side lip 6 at each rotation speed may be performed by mounting the basic hub seal 5 or the changed basic hub seal on a jig imitating the hub bearing 50. Further, the torque of the basic hub seal 5 or the changed basic hub seal may be measured without calculating or measuring the lip reaction force F of the side lip 6.

A description will be made about one example of the adjustment of the torque performance of the hub seal by the adjustment of the form factor of the side lip in the adjustment-check step about the torque performance. Figure 12 is a diagram illustrating a graph representing a relationship between the thickness T1 of the tip end portion 41 of the side lip 6 and the torque performance. As illustrated in Figure 12, as the thickness T1 of the tip end portion 41 of the side lip 6 becomes a larger value, the torque of the basic hub seal 5 or the changed basic hub seal in a high rotation speed region further lowers. In other words, as the value of the thickness T1 of the tip end portion 41 of the side lip 6 becomes larger, the centrifugal force acting on the tip end portion 41 of the side lip 6 becomes larger, and the tip end 41a of the tip end portion 41 of the side lip 6 becomes more likely to be moved away from the contact surface 33 of the sleeve 3.

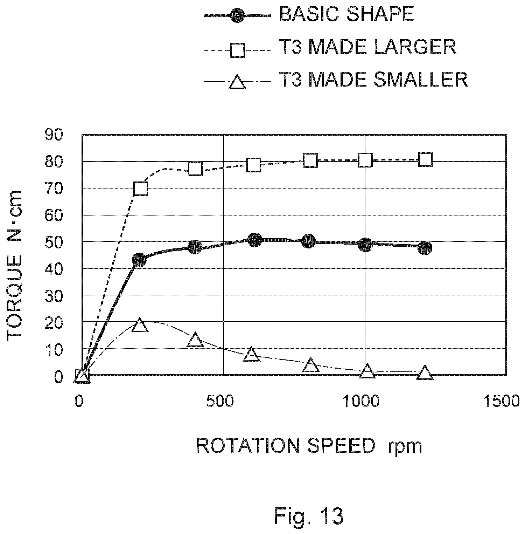

Figure 13 is a diagram illustrating a graph representing a relationship between the thickness T3 of the root portion 42 of the side lip 6 and the torque performance. As illustrated in Figure 13, as the thickness T3 of the root portion 42 of the side lip 6 becomes a larger value, the torque in the high rotation speed region further rises. In other words, as the value of the thickness T3 of the root portion 42 of the side lip 6 becomes larger, the side lip 6 becomes less likely to be curved, and even when the centrifugal force acts on the tip end portion 41 of the side lip 6, the tip end 41a of the tip end portion 41 of the side lip 6 becomes less likely to be moved away from the contact surface 33 of the sleeve 3.

Further, as the length L2 of the root portion 42 of the side lip 6 becomes a larger value, the torque in the high rotation speed region further lowers. However, this occurs in a case where the thickness T1 of the tip end portion 41 is sufficiently larger than the thickness T3 of the root portion 42. In other words, as the value of the length L2 of the root portion 42, which has a small thickness, of the side lip 6 becomes larger, the side lip 6 is more likely to be warped when the centrifugal force acts on the tip end portion 41 of the side lip 6, and the tip end 41a of the tip end portion 41 of the side lip 6 becomes more likely to be moved away from the contact surface 33 of the sleeve 3.

The form factor of the side lip 6 is adjusted based on the above-described relationship between the form factor of the side lip 6 and the torque performance, and the shape of the side lip 6 is thereby estimated in which the torque performance of the hub seal satisfies the requested torque value. Then, the lip reaction force F, at each rotation speed, of the side lip 6 having the estimated shape is calculated or measured, and the torque of the hub seal is calculated or estimated from the above lip reaction force F. Then, whether the calculated or measured torque of the hub seal satisfies the requested torque value is checked. As for the requested torque value, the maximum torque is equal to or smaller than 10 N·cm in a practical rotation speed range equal to or higher than 1,000 rpm, for example. In a case where the calculated or measured torque of the basic hub seal 5 or the changed basic hub seal satisfies the requested torque value, the manufacturing moves to a check on the seal performance. On the other hand, in a case where the calculated or measured torque of the basic hub seal 5 or the changed basic hub seal does not satisfy the requested torque value, the form factor of the side lip 6 is adjusted again, and the shape of the side lip 6 in which the torque performance satisfies the requested torque value is re-estimated. Then, the lip reaction force F, at each rotation speed, of the side lip 6 having the shape, which has been estimated again, is calculated or measured, the torque of the hub seal is calculated or estimated from the above lip reaction force F, and whether the calculated or measured torque satisfies the requested torque value is checked. In a case where the calculated or measured torque of the hub seal satisfies the requested torque value, the manufacturing moves to the check on the seal performance. On the other hand, in a case where the calculated or measured torque of the hub seal does not satisfy the requested torque value, the form factor of the side lip 6 is adjusted again, the lip reaction force F, at each rotation speed, of the side lip 6 having the shape, which has been adjusted again, is calculated or measured, the torque of the hub seal is calculated or estimated from the calculated or measured lip reaction force F, and whether the calculated or measured torque satisfies the requested torque value is checked. Subsequently, the form factor of the side lip 6 is similarly adjusted until the shape is obtained in which the torque performance of the basic hub seal 5 or the changed basic hub seal satisfies the requested torque value.

In a step of checking the seal performance, a relationship between the foreign body shake-off performance of the basic hub seal 5 or a reshaped basic hub seal and the torque performance of the basic hub seal 5 or the reshaped basic hub seal is checked, and whether the relationship between the foreign body shake-off performance and the torque performance is a good relationship is checked. A check on the relationship between the foreign body shake-off performance and the torque performance is performed with reference to the graph representing the relationship between the foreign-body surface position and the rotation speed of the hub seal and the graph representing the relationship between the torque and the rotation speed of the hub seal, which are illustrated in Figure 7, for example. For example, as illustrated in Figure 7, the graph representing the relationship between the foreign-body surface position and the rotation speed is superimposed on the graph representing the relationship between the torque and the rotation speed, and the relationship between the foreign body shake-off performance and the torque performance is thereby checked. In a case where the foreign-body surface position, which is considered to be sufficient with respect to the torque of the hub seal, is provided at each rotation speed of the practical rotation speed, it is determined that the relationship between the foreign body shake-off performance and the torque performance is a good relationship, the hub seal having this shape is set as the hub seal to be manufactured, and design of the hub seal 1 is completed. Then, the hub seal 1 is manufactured.

On the other hand, in a case where the foreign-body surface position, which is considered to be sufficient with respect to the torque, is not provided at each rotation speed of the practical rotation speed, it is determined that the relationship between the foreign body shake-off performance and the torque performance is not a good relationship. In a case where it is determined that the relationship between the foreign body shake-off performance and the torque performance is not a good relationship, in order to adjust the foreign body shake-off performance (the foreign-body surface position at each rotation speed) such that the relationship between the foreign body shake-off performance and the torque performance becomes a good relationship, the redesign of the basic hub seal 5 or the changed basic hub seal and a check on the foreign body shake-off performance are performed. Alternatively, in a case where it is determined that the relationship between the foreign body shake-off performance and the torque performance is not a good relationship, the adjustment of and the check on the torque performance of the basic hub seal 5 or the changed basic hub seal are performed such that the relationship between the foreign body shake-off performance and the torque performance becomes a good relationship. Alternatively, in a case where it is determined that the relationship between the foreign body shake-off performance and the torque performance is not a good relationship, the adjustment of and the check on the torque performance of the basic hub seal 5 or the changed basic hub seal are performed, in addition to the redesign of the basic hub seal 5 or the changed basic hub seal and the check on the foreign body shake-off performance, such that the relationship between the foreign body shake-off performance and the torque performance becomes a good relationship. In such a manner, until it can be determined that the relationship between the foreign body shake-off performance and the torque performance is a good relationship, at least either one of a procedure of the redesign of the basic hub seal 5 or the changed basic hub seal and the check on the foreign body shake-off performance and a procedure of the adjustment of and the check on the torque performance of the basic hub seal 5 or the changed basic hub seal is repeatedly performed. In a case where the foreign-body surface position, which is considered to be sufficient with respect to the torque, is provided at each rotation speed of the practical rotation speed, it is determined that the relationship between the foreign body shake-off performance and the torque performance is a good relationship, the hub seal having this shape is set as the hub seal to be manufactured, and the design of the hub seal 1 is completed. Then, the hub seal 1 is manufactured.

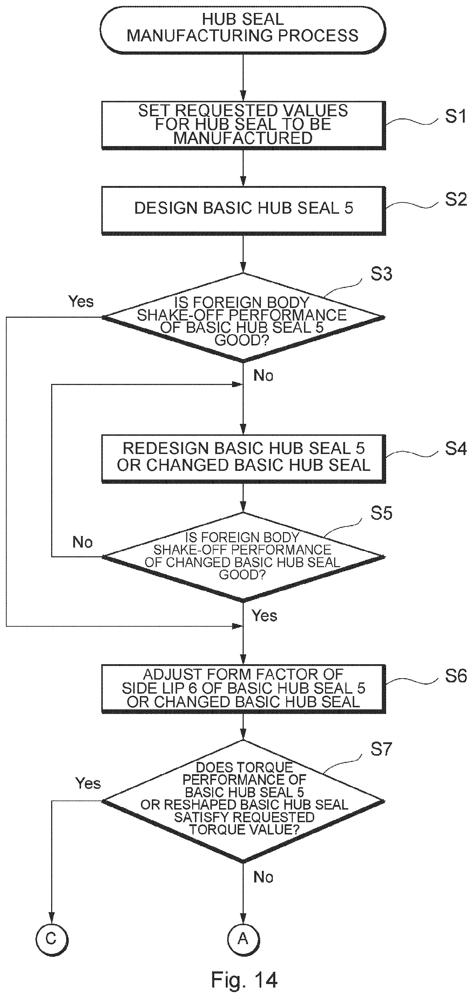

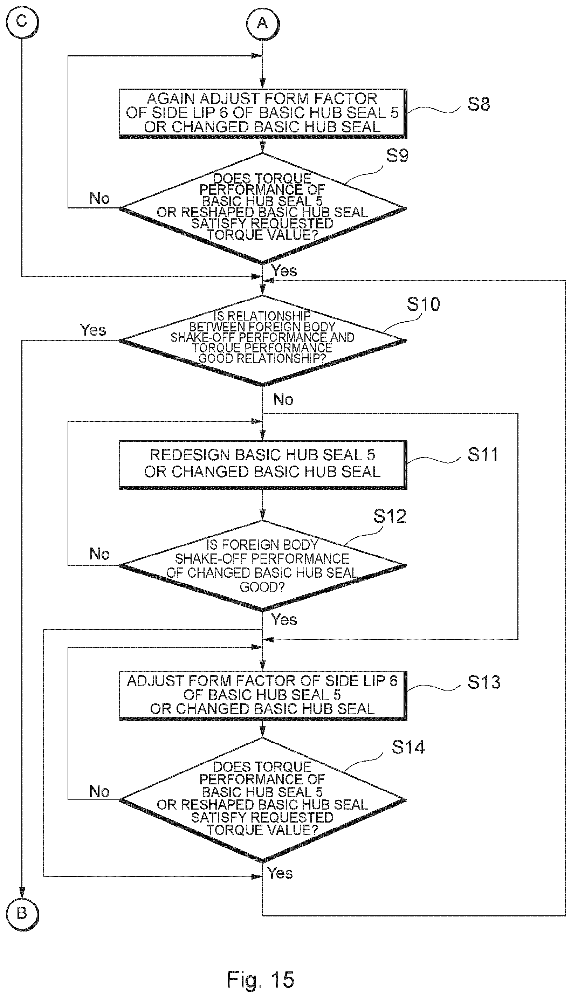

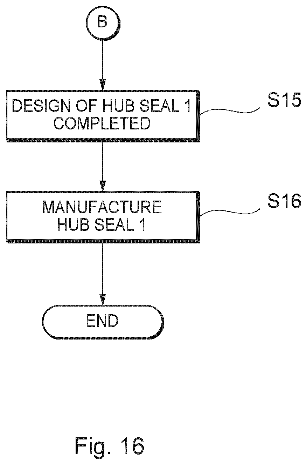

Hereinafter, a method for manufacturing the hub seal 1 will specifically be described. Figures 14 to 16 are diagrams illustrating flowcharts of a hub seal manufacturing process of manufacturing the hub seal 1.

As illustrated in Figures 14 to 16, in the hub seal manufacturing process, requested values for the hub seal 1 are first set (step S1). As described above, the requested values for the hub seal 1 represent the shapes and sizes demanded for the hub seal, the requested performance values, and so forth. In the present embodiment, the shapes and sizes demanded for the hub seal 1 are set based on a form of the hub bearing 50. Further, the requested torque value is set such that the maximum torque at the practical rotation speed equal to or higher than 1,000 rpm becomes 10 N·cm. Next, in step S2, the basic hub seal 5 is designed which conforms to the shapes and sizes set in step S1. As described above, the basic hub seal 5 is different only in the shape of the side lip from the hub seal 1 and has the side lip 6 in which the thickness of the tip end portion 41 is uniform throughout the length L1 (see Figures 9 and 10).

Next, the check on the foreign body shake-off performance of the basic hub seal 5 designed in step S2 is performed (step S3). In the check on the foreign body shake-off performance in step S3, as described above, the relationship between the rotation speed of the basic hub seal 5 and the foreign-body surface position in the basic hub seal 5 (see Figure 7) is checked, and it is determined whether or not the foreign body shake-off performance of the basic hub seal 5 is good foreign body shake-off performance. Specifically, whether or not the foreign-body surface position is at a height equal to or higher than the reference position Z (Z is 12 cm, for example) as the predetermined radial-direction position is checked in the range of the practical rotation speed equal to or higher than 1,000 rpm, and when the foreign-body surface position is at the height equal to or higher than the reference position Z in the range of the practical rotation speed, it is determined that the foreign body shake-off performance of the basic hub seal 5 is good (Yes in step S3). When it is determined that the foreign body shake-off performance of the basic hub seal 5 is good, the hub seal manufacturing process moves to the adjustment-check step about the torque performance of the basic hub seal 5 (step S6). On the other hand, when the foreign-body surface position is lower than the reference position Z in the range of the practical rotation speed, it is determined that the foreign body shake-off performance of the basic hub seal 5 is not good (No in step S3).

In step S3, in a case where it is determined that the foreign body shake-off performance of the basic hub seal 5 is not good (No in step S3), the redesign of the basic hub seal 5 is performed so as to improve the foreign body shake-off performance of the basic hub seal 5 (step S4). In step S4, the structure influencing the foreign body shake-off performance of the basic hub seal 5 is changed, and the changed basic hub seal is thereby designed. The structure influencing the foreign body shake-off performance of the basic hub seal 5 is the shape of the upstream space S of the basic hub seal 5, for example. Next, similarly to step S3, the check on the foreign body shake-off performance is performed for the changed basic hub seal (step S5). In step S5, in a case where it is determined that the foreign body shake-off performance of the changed basic hub seal is not good (No in step S5), the hub seal manufacturing process returns to step S4, and the redesign of the basic hub seal 5 is again performed so as to improve the foreign body shake-off performance of the basic hub seal 5. In this case, in step S5, the redesign of the changed basic hub seal is performed so as to improve the foreign body shake-off performance of the changed basic hub seal whose foreign body shake-off performance is determined to be not good, and a new changed basic hub seal may thereby be designed. In step S5, until it is determined that the foreign body shake-off performance of the changed basic hub seal is good, the design of the changed basic hub seal (step S4) and the check on the foreign body shake-off performance of the changed basic hub seal (step S5) are repeated. Then, in step S5, when it is determined that the foreign body shake-off performance of the changed basic hub seal is good (Yes in step S5), the hub seal manufacturing process moves to the adjustment-check step about the torque performance of the changed basic hub seal (step S6).

In the adjustment-check step about the torque performance of the basic hub seal 5 or the changed basic hub seal, the shape of the side lip is first estimated in which the torque performance of the basic hub seal 5 or the changed basic hub seal provides the lip reaction force F which satisfies the requested torque value set in step S1, the form factor defining the lip reaction force F is adjusted based on the above estimation, and the shape of the side lip 6 is thereby adjusted from the basic shape (step S6). Next, whether or not the torque performance of the basic hub seal 5 or the changed basic hub seal, which has the adjusted side lip 6, satisfies the requested torque value set in step S1 is checked (step S7). In a case where the torque performance of the basic hub seal 5 or the changed basic hub seal, which has the adjusted side lip 6, satisfies the requested torque value set in step S1 (Yes in step S7), the hub seal manufacturing process moves to a seal performance checking step (step S10).

On the other hand, in a case where the torque performance of the basic hub seal 5 or the changed basic hub seal, which has the adjusted side lip 6, does not satisfy the requested torque value set in step S1 (No in step S7), the shape of the side lip is again estimated in which the torque performance of the basic hub seal 5 or the changed basic hub seal provides the lip reaction force F which satisfies the requested torque value set in step S1, the form factor defining the lip reaction force F is again adjusted based on the above estimation obtained again, and the shape of the side lip 6 is thereby adjusted (step S8). Next, similarly to step S7, whether or not the torque performance of the basic hub seal 5 or the changed basic hub seal, which has the side lip 6 adjusted again in step S8, satisfies the requested torque value set in step S1 is checked (step S9). In a case where the torque performance of the basic hub seal 5 or the changed basic hub seal, which has the side lip 6 adjusted again, satisfies the requested torque value set in step S1 (Yes in step S9), the hub seal manufacturing process moves to the seal performance checking step (step S10).

On the other hand, in step S9, in a case where the torque performance of the basic hub seal 5 or the changed basic hub seal, which has the side lip 6 adjusted again, does not satisfy the requested torque value set in step S1 (No in step S9), the hub seal manufacturing process returns to step S8, the shape of the side lip is again estimated in which the torque performance of the basic hub seal 5 or the changed basic hub seal provides the lip reaction force F which satisfies the requested torque value set in step S1, the form factor defining the lip reaction force F is again adjusted based on the above estimation obtained again, and the shape of the side lip 6 is thereby adjusted. In step S9, until the torque performance of the basic hub seal 5 or the changed basic hub seal, which has the side lip 6 adjusted again, satisfies the requested torque value set in step S1, the adjustment of the shape of the side lip 6 (step S8) and the check on the torque performance of the basic hub seal 5 or the changed basic hub seal, which has the adjusted side lip 6, (step S9) are repeated. Then, in step S9, when it is determined that the torque performance of the basic hub seal 5 or the changed basic hub seal, which has the side lip 6 adjusted again, satisfies the requested torque value set in step S1 (Yes in step S9), the hub seal manufacturing process moves to the seal performance checking step (step S10).

In the seal performance checking step (step S10), as described above, the relationship between the foreign body shake-off performance of the basic hub seal 5 or the reshaped basic hub seal and the torque performance of the basic hub seal 5 or the reshaped basic hub seal is checked, and whether the relationship between the foreign body shake-off performance and the torque performance is a good relationship is checked. As illustrated in Figure 7, in a case where the foreign-body surface position, which is considered to be sufficient with respect to the torque of the basic hub seal 5 or the reshaped basic hub seal, is provided at each rotation speed of the practical rotation speed, it is determined that the relationship between the foreign body shake-off performance and the torque performance is a good relationship (Yes in step S10).

On the other hand, in the seal performance checking step (step S10), in a case where the foreign-body surface position, which is considered to be sufficient with respect to the torque of the basic hub seal 5 or the reshaped basic hub seal, is not provided, it is determined that the relationship between the foreign body shake-off performance and the torque performance is not a good relationship (No in step S10). In step S10, when it is determined that the relationship between the foreign body shake-off performance and the torque performance is not a good relationship, in order to make the relationship between the foreign body shake-off performance and the torque performance become a good relationship, similarly to steps S4 and S5, the redesign of the basic hub seal 5 or the changed basic hub seal is performed (step S11), the check on the foreign body shake-off performance is performed (step S12), and adjustment of the foreign body shake-off performance (the foreign-body surface position at each rotation speed) is performed. Then, when it is determined that the foreign body shake-off performance is good in step S12, the check on the seal performance is performed again (step S10).

Further, in step S10, when it is determined that the relationship between the foreign body shake-off performance and the torque performance is not a good relationship, in order to make the relationship between the foreign body shake-off performance and the torque performance become a good relationship, similarly to steps S6 and S7, the shape of the side lip 6 is adjusted (step S13), the check on the torque performance of the basic hub seal 5 or the changed basic hub seal is performed (step S14), and adjustment of the torque, at each rotation speed, of the basic hub seal 5 or the changed basic hub seal is performed. Then, when it is determined that the torque performance is good in step S14, the check on the seal performance is performed again (step S10). Note that in step S10, when it is determined that the relationship between the foreign body shake-off performance and the torque performance is not a good relationship, in order to make the relationship between the foreign body shake-off performance and the torque performance become a good relationship, two adjustment procedures of the adjustment of the foreign body shake-off performance (the foreign-body surface position at each rotation speed) in the above-described steps S11 and S12 and the adjustment of the torque at each rotation speed in the above-described steps S13 and 14 may be performed.

Processes in steps S10 to S14 are performed in such a manner, and a form of the basic hub seal 5 or the changed basic hub seal, in which it is determined that the relationship between the foreign body shake-off performance and the torque performance is a good relationship, is thereby derived. Next, when it is determined that the relationship between the foreign body shake-off performance and the torque performance is a good relationship (Yes in step S10), a hub seal having the derived form is set as the hub seal 1 to be manufactured, and the design of the hub seal 1 is completed (step S15). Then, the hub seal 1 is manufactured (step S16), and the hub seal manufacturing process is finished.

As described above, in the method for manufacturing a hub seal according to the embodiment of the present invention, the hub seal 1 can be manufactured that can lower the limit, for maintaining the needed seal performance, to reduction in the lip reaction force F of the side lip 4. Thus, in the method for manufacturing a hub seal according to the embodiment of the present invention, the hub seal 1 can be manufactured that can lower the limit, for maintaining the needed seal performance, to reduction in the torque of the hub seal 1.

In the foregoing, the embodiments of the present invention have been described. However, the present invention is not limited to the hub seal 1 or the method for manufacturing the hub seal 1 according to the above-described embodiments of the present invention and includes all forms which are included in the concepts and the claims of the present invention. Further, configurations may appropriately selectively be combined such that at least a part of the above-described objects and effects is exhibited. For example, shapes, materials, arrangement, sizes, and so forth of the configurations in the above-described embodiments can appropriately be changed in accordance with specific usage forms of the present invention.

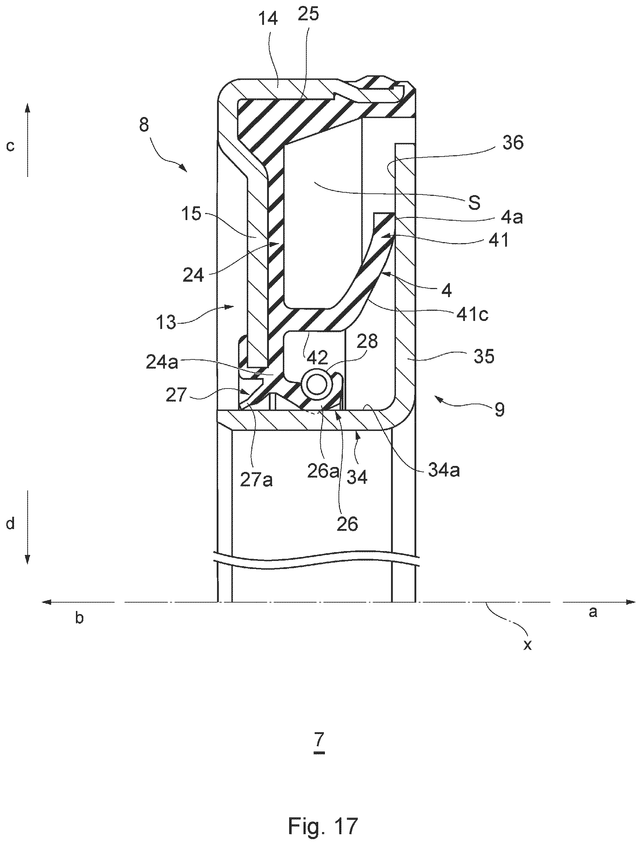

For example, a hub seal which is manufactured by the method for manufacturing a hub seal according to the present invention is not limited to a hub seal to be applied to a hub bearing of the inner ring rotation type like the above-described hub seal 1 and includes hub seals to be applied to hub bearings of an outer ring rotation type. Figure 17 is a view illustrating a hub seal 7 as another example of the hub seal to be manufactured by the method for manufacturing a hub seal according to the present invention and is a cross-sectional view in a cross section of the hub seal 7 along the axis line x. Hereinafter, as for the hub seal 7, the same reference characters as the reference characters for the hub seal 1 are given to configurations having functions the same as or similar to those of the above-described hub seal 1, descriptions thereof will not be made, and different configurations from those of the hub seal 1 will be described.

As illustrated in Figure 17, for example, the hub seal 7 specifically includes a seal main body 8 as a first seal member to be mounted on an outer ring (not illustrated) of the hub bearing (not illustrated) on a rotating side and a sleeve 9 as a second seal member to be mounted on an inner ring (not illustrated) of the hub bearing on a fixed side. Each of the seal main body 8 and the sleeve 9 is a member which is annular around the axis line x, and the seal main body 8 has the side lip 4 which is annular around the axis line x. The seal main body 8 is fixed to the outer periphery side differently from the above-described seal main body 2, and the sleeve 9 is fixed to the inner periphery side differently from the above-described sleeve 3.

The sleeve 9 has a cross-sectional shape similar to that of the sleeve 3 and has a tubular portion 34 corresponding to the tubular portion 31 of the sleeve 3 and a circular ring portion 35 corresponding to the circular ring portion 32 of the sleeve 3. The tubular portion 34 has such a shape that the tubular portion 34 is fitted in the inner ring in the interference fit manner so that the sleeve 9 is fitted on the inner ring. In the circular ring portion 35, a contact surface 36 as a surface that the side lip 4 contacts in the usage state of the hub seal 7 is formed. The contact surface 36 is a surface in the circular ring portion 35, which faces the inner side, and is a flat surface or a generally flat surface which expands in parallel or generally parallel with a flat surface orthogonal or generally orthogonal to the axis line x and is annular around the axis line x.

The seal main body 8 has a reinforcement ring 13 corresponding to the reinforcement ring 10 of the seal main body 2 and an elastic body portion 23 corresponding to the elastic body portion 20 of the seal main body 2. The reinforcement ring 13 has a cross-sectional shape similar to that of the reinforcement ring 10 and has a tubular portion 14 corresponding to the tubular portion 11 of the reinforcement ring 10 and a circular ring portion 15 corresponding to the circular ring portion 12 of the reinforcement ring 10. The tubular portion 14 has such a shape that the outer ring is fitted in the tubular portion 14 in the interference fit manner so that the reinforcement ring 13 is fitted on the outer ring.

The elastic body portion 23 has a base body portion 24 and a tubular-shaped portion 25 which respectively correspond to the base body portion 21 and the tubular-shaped portion 22 of the elastic body portion 20 of the seal main body 2. The base body portion 24 is a portion which is mounted on a portion, on the inner periphery side, of the circular ring portion 15 of the reinforcement ring 13, and the tubular-shaped portion 25 is a portion which is mounted on a portion, on the outer periphery side, of the circular ring portion 15 of the reinforcement ring 13 and on the tubular portion 14. Further, the elastic body portion 23 has a seal lip 26 and a grease lip 27. The side lip 26 is intended to prevent entry of foreign bodies into the sealed space S1 and is intended to prevent outflow of the lubricant from the inside of the sealed space S1. Further, the grease lip 27 is intended to prevent outflow of the lubricant from the inside of the sealed space S1. Note that the hub seal 7 does not have to have the side lip 26. Similarly, the hub seal 7 does not have to have the grease lip 27.

The seal lip 26 extends to the outer side from an end portion (inner periphery end portion 24a) of the base body portion 24 on the inner periphery side, the end portion being positioned in the vicinity of an end portion, on the inner periphery side, of the circular ring portion 15 of the reinforcement ring 13, and the grease lip 27 extends from the inner periphery end portion 24a of the base body portion 24 to the inner side and the inner periphery side. The seal lip 26 has a form similar to that of a known seal lip and has a lip tip end portion 26a on a tip end side as illustrated in Figure 17. The lip tip end portion 26a is a portion whose cross section has a wedge shape, for example, and contacts an outer peripheral surface 34a of the tubular portion 34 of the sleeve 8 in the usage state. The grease lip 27 has a form similar to that of a known grease lip, and a lip tip end portion 27a contacts the outer peripheral surface 34a of the tubular portion 34 of the sleeve 8 in the usage state as illustrated in Figure 17. Further, in the seal lip 26, a garter spring 28 is mounted in a position on an opposite side to the lip tip end portion 26a, and the garter spring 28 exerts tightening force on the seal lip 26 to push the lip tip end portion 26a to the inner periphery side and enhances tightening force to press the lip tip end portion 26a onto the tubular portion 34 of the sleeve 9.

Further, as described above, the elastic body portion 23 has the side lip 4. As illustrated in Figure 17, in the hub seal 7, the side lip 4 extends from the base body portion 24 of the elastic body portion 23 toward the outer side and the outer periphery side, the inner peripheral surface 41c of the side lip 4 forms the contact surface 4a for sealing of a space between the outer ring and the inner ring. Further, in the usage state of the hub seal 7, the side lip 4 is formed such that the contact surface 4a of the tip end portion 41 contacts the contact surface 36 of the sleeve 8 while having a predetermined interference.

The hub seal 7, similarly to the hub seal 1, can lower the limit, for maintaining the needed seal performance, to reduction in the lip reaction force F of the side lip 4.

Further, the seal lip 26 and the grease lip 27 are provided in the hub seal 7, entry of foreign bodies can be prevented by the seal lip 26 and the grease lip 27 in addition to the side lip 4, and outflow of the lubricant can be prevented. Further, because the garter spring 28 is mounted on the seal lip 26, in the seal lip 26, the tightening force onto the tubular portion 34 of the sleeve 9 is enhanced by the garter spring 28. Thus, the seal lip 26 is inhibited from moving away from the tubular portion 34 of the sleeve 9 during rotation, particularly, high-speed rotation of the hub bearing, and outflow of the lubricant can be inhibited. In such a manner, in the hub seal 7, the lubricant is much less likely to flow out.

Further, for example, a hub seal according to the present invention can be applied to an in-wheel motor unit. An in-wheel motor unit is a driving device in which a hub bearing and a motor are integrally configured, is mounted on a wheel of a vehicle, gives motive power to the wheel by supplying a motor output to the wheel via the hub bearing, and generates electricity by converting the motive power of the wheel into electric power via a motor generator.

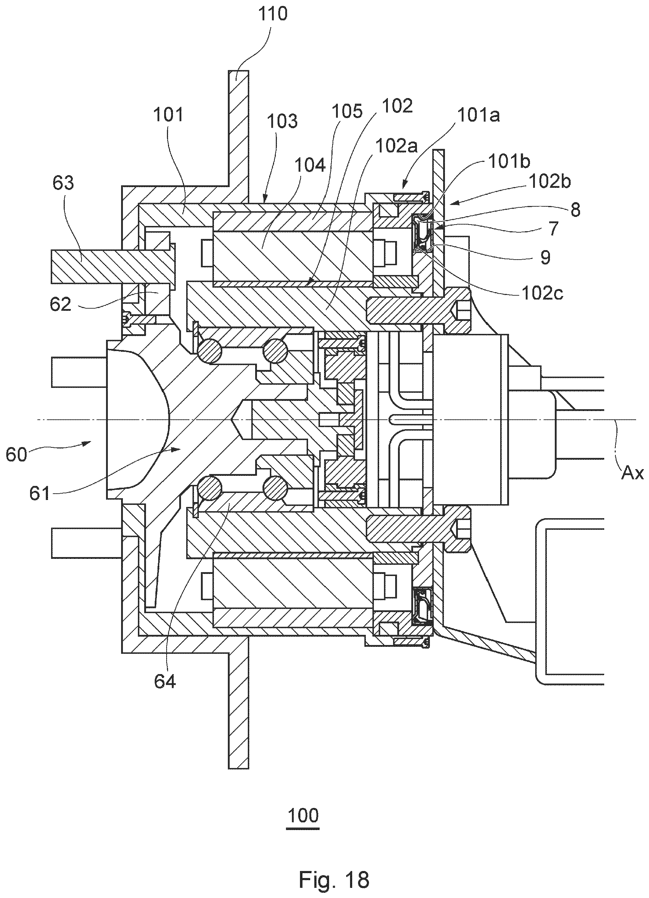

Figure 18 is a cross-sectional view of one example of an in-wheel motor unit for which the hub seal 7 is used. For example, as illustrated in Figure 18, an in-wheel motor unit 100 includes a hub bearing 60 of the inner ring rotation type, an outside casing 101 as an outside member which is mounted on the hub bearing 60, an inside casing 102 as an inside member, and a motor generator 103. Specifically, the outside casing 101 is a member which is tubular and forms an inside space housing the hub bearing 60. The outside casing 101 is held between a hub flange 62 included in an inner ring 61 of the hub bearing 60 and a brake disk 110 to be mounted on the hub flange 62 and is fixed between the hub flange 62 and the brake disk 110 by fixing the wheel to the inner ring 61 by a hub bolt 63.

The inside casing 102 has a tubular portion 102a as a member which is tubular and forms a space, on the inner periphery side, which houses an outer ring 64 of the hub bearing 60 and a disk portion 102b as a portion which has a disk shape and expands from an end portion of the tubular portion 102a on the inner side to the outer periphery side. The tubular portion 102a has such a shape that the outer ring 64 is fitted in and fixed to the space on the inner periphery side. As illustrated in Figure 18, the outside casing 101 and the inside casing 102 have shapes in which a surface of the outside casing 101 on the inner periphery side and a surface, on the outer periphery side, of the tubular portion 102a of the inside casing 102 are opposed to each other and an annular space is formed between the outside casing 101 and the tubular portion 102a. Further, as illustrated in Figure 18, the outside casing 101 and the inside casing 102 have shapes in which an end portion (end portion 101a) of the outside casing 101 on the inner side is opposed to the disk portion 102b of the inside casing 102 in an axis line Ax direction. An annular gap is formed between the end portion 101a of the outside casing 101 and the disk portion 102b.

The motor generator 103 is a member which is tubular and extends along the axis line Ax and is provided in the annular space between the outside casing 101 and the tubular portion 102a of the inside casing 102. Specifically, the motor generator 103 includes a rotor 104 and a stator 105, the rotor 104 is fixed to the outside casing 101, and the stator 105 is fixed to the tubular portion 102a of the inside casing 102.

In the in-wheel motor unit 100, the hub seal 7 is provided to prevent foreign bodies from entering an internal portion of the in-wheel motor unit 100 through the annular gap between the end portion 101a of the outside casing 101 and the disk portion 102b of the inside casing 102. For example, as illustrated in Figure 18, the hub seal 7 is mounted between the end portion 101a of the outside casing 101 and the disk portion 102b of the inside casing 102. Specifically, the sleeve 9 is fitted on a mounting surface 102c of the disk portion 102b of the inside casing 102 in the interference fit manner, and the sleeve 9 is fixed to the disk portion 102b of the inside casing 102. Further, specifically, the seal main body 8 is fitted on a mounting surface 101b of the end portion 101a of the outside casing 101 in the interference fit manner, and the seal main body 8 is fixed to the outside casing 101. Note that the mounting surface 102c of the disk portion 102b of the inside casing 102 is a surface which has a cylindrical surface shape and extends along the axis line Ax, and the mounting surface 101b of the end portion 101a of the outside casing 101 is a surface which has a cylindrical surface shape and extends along the axis line Ax. Further, the mounting surface 101b and the mounting surface 102c are opposed to each other in the radial direction.

### Reference Signs List

- 1, 7: hub seal
- 2, 8: seal main body
- 3, 9: sleeve
- 4, 6: side lip
- 4a: contact surface
- 5: basic hub seal
- 10, 13: reinforcement ring
- 11, 14: tubular portion
- 12, 15: circular ring portion
- 20, 23: elastic body portion
- 21, 24: base body portion
- 21a: inner side surface
- 22, 25: tubular-shaped portion
- 24a: inner periphery end portion
- 26: seal lip
- 26a: lip tip end portion
- 27: grease lip
- 27a: lip tip end portion
- 28: garter spring
- 31, 34: tubular portion
- 32, 35: circular ring portion
- 33, 36: contact surface
- 34a: outer peripheral surface
- 41: tip end portion
- 41a: tip end
- 41b: root end
- 41c: inner peripheral surface
- 41d: outer peripheral surface
- 41e: inner periphery tip end
- 41f: outer periphery tip end
- 41g: inner periphery root end
- 41h: outer periphery root end
- 42: root portion
- 42a: tip end
- 42b: root end
- 42c: inner peripheral surface
- 42d: outer peripheral surface
- 42e: inner periphery tip end
- 42f: outer periphery tip end
- 42g: inner periphery root end
- 42h: outer periphery root end
- 43, 44: transition portion
- 43a, 44a: inner periphery transition surface
- 43b, 44b: outer periphery transition surface
- 50: hub bearing
- 50a: inner side opening portion
- 50b: outer side opening portion
- 51: outer ring
- 51a: end portion
- 52: hub
- 53: bearing ball
- 54: inner ring
- 54a: end portion
- 54b: outer peripheral surface
- 55: hub ring
- 55a: shaft portion
- 55b: wheel-mounting flange
- 56: retainer
- 57: through hole
- 58: other sealing device
- 59: hub bolt
- 60: hub bearing
- 61: inner ring
- 62: hub flange
- 63: hub bolt
- 64: outer ring
- 100: in-wheel motor unit
- 101: outside casing
- 101a: end portion
- 101b: mounting surface
- 102: inside casing
- 102a: tubular portion
- 102b: disk portion
- 102c: mounting surface
- 103: motor generator
- 104: rotor
- 105: stator
- 110: brake disk
- A: seal surface
- c1, c2: extending direction line
- F: lip reaction force
- L1, L2: length
- S: upstream space
- S1: sealed space
- T1, T2, T3: thickness
- x: axis line
- V: virtual line
- vp1, vp2: virtual intersection point
- Z: reference position
- θ: bent angle

## Claims

1. A method for manufacturing a hub seal, the hub seal having a side lip and being intended for sealing of a space between an outer ring and a hub of a hub bearing, the method being **characterized by** comprising:
setting a set rotation speed as a rotation speed at which a foreign body entering an internal portion of the hub seal is positioned at a desired position in a radial direction orthogonal to an axis line by rotation around the axis line;
designing a shape of the side lip such that torque of the hub seal at the set rotation speed becomes a desired value; and
manufacturing the hub seal such that the hub seal becomes a hub seal which has the designed shape of the side lip.

2. The method for manufacturing a hub seal according to claim 1, **characterized by** comprising:
obtaining a relationship between a position, in a radial direction orthogonal to an axis line, at which a foreign body entering an internal portion of a basic hub seal as a hub seal having a predetermined shape is positioned by rotation around the axis line, and a rotation speed of the rotation; and
checking whether the position of the foreign body at the set rotation speed is the desired position in the obtained relationship between the position of the foreign body in the basic hub seal and the rotation speed.

3. The method for manufacturing a hub seal according to claim 2, **characterized by** comprising:
obtaining a relationship between a position, in a radial direction orthogonal to an axis line, at which a foreign body entering an internal portion of a changed basic hub seal is positioned by rotation around an axis line, the changed basic hub seal having a shape in which the shape of the basic hub seal is changed, and the rotation speed of the rotation; and
checking whether the position of the foreign body at the set rotation speed is the desired position in the obtained relationship between the position of the foreign body in the changed basic hub seal and the rotation speed.

4. The method for manufacturing a hub seal according to claim 3, **characterized in that**
in the changed basic hub seal, a shape of a space in the basic hub seal on a side away from the space between the outer ring and the hub relative to the side lip is changed.

5. The method for manufacturing a hub seal according to claim 1, **characterized by** comprising
designing the side lip by adjusting at least any of a thickness of a tip end portion of the side lip, a thickness of a root portion of the side lip, and a length of the root portion of the side lip such that the torque of the hub seal at the set rotation speed becomes the desired value.

6. The method for manufacturing a hub seal according to claim 2, **characterized by** comprising
designing the side lip by adjusting at least any of a thickness of a tip end portion of the side lip of the basic hub seal, a thickness of a root portion of the basic side lip, and a length of the root portion of the basic side lip such that the torque of the hub seal at the set rotation speed becomes the desired value.

7. The method for manufacturing a hub seal according to claim 3, **characterized by** comprising
designing the side lip by adjusting at least any of a thickness of a tip end portion of the side lip of the changed basic hub seal, a thickness of a root portion of the changed basic side lip, and a length of the root portion of the changed basic side lip such that the torque of the hub seal at the set rotation speed becomes the desired value.
